# EUROPÄISCHE PATENTSCHRIFT

(11) **EP 2 825 032 B1**
(45) Veröffentlichungstag und Bekanntmachung des Hinweises auf die Patenterteilung: **26.02.2020**
(21) Anmeldenummer: 13712515.9
(22) Anmeldetag: 14.03.2013
(51) Int. Cl.: A01K 1/12

(54) **PLATZTEILER EINER MELKSTANDANORDNUNG UND MELKSTANDANORDNUNG**
SPACE DIVIDER OF A MILKING PARLOR ARRANGEMENT, AND MILKING PARLOR ARRANGEMENT
PORTILLONS DE SÉPARATION POUR UNE INSTALLATION DE TRAITE ET INSTALLATION DE TRAITE

(30) Priorität: 14.03.2012 DE 102012102132; 02.11.2012 DE 102012110501
(43) Veröffentlichungstag der Anmeldung: 21.01.2015
(73) Patentinhaber: GEA Farm Technologies GmbH, 59199 Bönen (DE)
(72) Erfinder: KRONE, Otto, 49479 Ibbenbüren (DE); HENSEL, Derk, 06917 Jessen (DE); TROSSEHL, Marc, 59368 Werne (DE); HILLE, Dieter, 59302 Oelde (DE); SCHNEIDER, Erich, 59229 Ahlen (DE); HÖNSCHEID, Armin, 59199 Bönen (DE); MADER, Thomas, 33378 Rheda-Wiedenbrück (DE)
(74) Vertreter: Kleine, Hubertus
(86) Internationale Anmeldenummer: PCT/EP2013/055270
(87) Internationale Veröffentlichungsnummer: WO 2013/135832

(56) Entgegenhaltungen:
- EP-A1- 0 551 960
- EP-A1- 0 736 246
- WO-A1-2008/118068
- WO-A1-2010/052156
- WO-A1-2011/098454
- WO-A2-2011/098994
- DE-A1-102006 027 919
- US-A- 5 596 945

## Beschreibung

Die Erfindung betrifft einen Platzteiler einer Melkstandanordnung nach dem Oberbegriff des Anspruchs 1. Die Erfindung bezieht sich auch auf eine Melkstandanordnung nach dem Oberbegriff von Anspruch 14.

Eine derartige Melkstandanordnung wird zum maschinellen Melken von milchgebenden Tieren verwendet. Milchgebende Tiere sind beispielsweise Kühe, Ziegen, Schafe usw. Die Melkstandanordnung weist Melkstände auf, die durch Platzteiler getrennt sind. Der Melkvorgang kann mittels so genannter Melkroboter automatisiert werden. Es sind z.B. Melkkarusselle im Einsatz.

Unter dem Begriff Melkstandanordnung sind Anordnungen von Melkständen zu verstehen, wobei eine Winkelstellung eines zu melkenden Tieres bzw. eine Winkelstellung einer gedachten Längsachse eines zu melkenden Tieres in einem Melkstand zu einem Referenzpunkt bzw. zu einer Referenzlinie zwischen 0° und 90° betragen kann. Als Referenzpunkt wird beispielsweise eine Grube verwendet, welche der Aufenthaltsort des Melkpersonals ist. Als Referenzlinie wird beispielsweise die Längsseite einer geradlinigen Grube oder eine Tangente einer kreisförmigen Grube verwendet.

Melkstandanordnungen sind z.B. bewegliche und unbewegliche Melkstandanordnungen. Bewegliche Melkstandanordnungen sind z.B. Melkkarusselle als Außenmelker und Innenmelker, beide Arten mit beliebiger Drehrichtung. So genannte Side-By-Side-Melkstände können auch als bewegliche Melkstandanordnungen ausgebildet sein. Weiterhin sind Gruppenmelkstände auch unbeweglich, wie z.B. Fischgrätmelkstände und Tandemmelkstände. Diese Auflistung ist nur beispielhaft und nicht eingrenzend.

EP 1 084 611 B1 beschreibt eine Roboterarmkonstruktion mit einer schwenkbaren Trageinheit für ein Melkzeug. Die Konstruktion ist an einer oder mehreren Schienen entlang einer oder mehrerer Melkboxen bewegbar.

Die bestehende Automatisierungstechnik ist auf Grund geringen Durchsatzes nicht oder nur eingeschränkt für Großanlagen geeignet. Die immer weiter steigenden Anforderungen insbesondere nach hohen Durchsatzzahlen und kontinuierlichem Betrieb erfordern bei heutigen Melkrobotern, die komplex und kostenaufwendig sind, eine gemeinsame Nutzung für mehrere Melkplätze. Dies kann sich nachteilig auswirken, u.a. aufgrund hoher Komplexität und damit verbundener hoher Ausfallwahrscheinlichkeit, diskontinuierlicher Betrieb, gesperrte Bereiche für das Personal (Sicherheit im Roboterbereich).

Das Dokument US 5,596,945 A beschreibt eine Anlage zum automatischen Melken von Tieren wie z.B. Kühen, die einen Melkstand mit einem Melkroboter und einen überdeckten Bereich, in dem sich die Tiere frei bewegen können, umfasst. Die Anlage weist ferner ein System von Einwegportalen, z.B. Türen und Tore, auf, welche sich in nur eine Richtung öffnen, um einen Pfad von dem Melkstand durch den überdeckten Bereich und schließlich zurück zu dem Melkstand festzulegen. Der Melkroboter ist so zwischen zwei benachbarten Melkständen angeordnet, dass er von einem Melkstand zum anderen Melkstand unter das Euter und die Zitzen eines darin befindlichen Tieres verstellbar ist. Dabei wird ein Tier zuerst in einem Melkstand auf der einen Seite und in dem anderen Melkstand auf der anderen Seite gemolken. Zwischen den Melkständen ist zudem ein Mechanismus zum automatischen Reinigen von Euter und Zitzen eines Tieres angeordnet, während ein Tier in dem anderen Melkstand gemolken wird. Das Melkzeug ist dabei fest mit einem Arm des Melkroboters verbunden, wodurch ein manueller Eingriff während des Melkvorgangs nicht möglich ist.

Das Dokument EP 0 551 960 A1 betrifft ebenfalls eine Vorrichtung zum automatisierten Melken von Tieren. Die Vorrichtung umfasst einen Melkroboter mit einem Trägerglied, das zum Tragen einer Anzahl von Zitzenbechern ausgebildet ist. Die Zitzenbecher können automatisiert an die Zitzen eines Tieres angelegt werden. Das Trägerglied ist mit Kontaktflächen versehen, welche sich an der Seite und um den Endabschnitt des Trägergliedes herum in einer im Wesentlichen vertikalen Richtung erstrecken. Die Zitzenbecher können, gesehen in einer Draufsicht, in einer V-förmigen Konfiguration mittels flexibler Zugmittel seitlich gegen die Kontaktflächen gezogen werden. Eine Lasereinrichtung zur Feststellung der Position der Zitzen ist hinter den in V-Form angeordneten Zitzenbechern angebracht. Bei gelockertem Zugmittel können die einzelnen Zitzenbecher von den Kontaktflächen wegbewegt werden, so dass eine Flexibilität in der Positionierung gegeben ist. Näher als durch die Größe des Trägerglieds vorgegeben, können die Zitzenbecher jedoch nicht zueinander positioniert werden.

Vor diesem Hintergrund besteht die Aufgabe der Erfindung darin, eine verbesserte Anordnung sowie einen Melkstand mit besonders kompaktem Melkzeug bereitzustellen, insbesondere um das Melkzeug im Platzteiler platzsparend unterbringen zu können.

Diese Aufgabe wird durch einen Platzteiler mit den Merkmalen des Anspruchs 1 und durch eine Melkstandanordnung mit den Merkmalen des Anspruchs 14 gelöst.

Der Platzteiler ist an einer Längsseite des Melkstands angeordnet und weist eine Armeinrichtung mit einem Melkzeug auf, welche aus einer Parkposition in eine Arbeitsposition und zurück verstellbar ist. Die Armeinrichtung ist mit dem Melkzeug in der Parkposition in dem Platzteiler angeordnet und seitlich zu einem zu melkenden Tier zwischen dessen Vorder- und Hinterbeine in einem Vollautomatikbetrieb oder Halbautomatikbetrieb in die Arbeitsposition verstellbar.

Bei einer Melkstandanordnung mit nebeneinander angeordneten rechtwinkligen Melkständen, die jeweils parallele Längsseiten aufweisen, wie es z.B. bei einer Side-By-Side-Anordnung der Fall ist, ist der Platzteiler parallel zu einer gedachten Längsachse des zu melkenden Tieres angeordnet. Dabei wird vereinfacht angenommen, dass das zu melkende Tier mit seiner gedachten Längsachse während des Melkvorgangs in einem Idealzustand still steht.

Im Falle einer Melkstandanordnung mit kreisförmig angeordneten Melkständen wie bei einem Melkkarussell sind die Längsseiten der Melkstände nicht parallel. In diesem Fall sind die Längsseiten Abschnitte von Radien eines Kreises des Melkkarussells und schneiden sich in gedachter Verlängerung im Mittelpunkt dieses Kreises bzw. im Drehpunkt des Melkkarussells, wobei sie einen Mittelpunktswinkel bilden. Die gedachte Längsachse des zu melkenden Tiers verläuft im Idealfall auch durch den Drehpunkt und halbiert den Mittelpunktswinkel. Dieser Fall ist im weiteren Verlauf hier mit dem Begriff "annähernd parallel" abgekürzt.

Ein zu melkendes Tier kann in den mit dem Platzteiler versehenen Melkstand eintreten, ohne mit der Armeinrichtung in Berührung zu kommen. Erst wenn das Tier in dem Melkstand steht, wird das Melkzeug von der Seite her in die Arbeitsposition unter das Tier verstellt. Der Platzteiler ist in einer Ausführung so ausgelegt, dass kein zusätzlicher Platzbedarf entsteht. Dadurch ergibt sich der Vorteil, dass die Tiere weiterhin Bauch an Bauch stehen können. Dies hat weitere Vorteile: Zum Einen können auf diese Weise viele Tiere auf kleinstmöglichem Raum gemolken werden, wodurch Kosten für die Melkstandanordnung und auch für das zugehörigen Gebäude niedrig gehalten werden können. Zum Anderen bleiben die Laufwege für Melkpersonal und die Tiere kürzer, d.h. Zeitersparnis.

Mit dem Verstellen der Armeinrichtung mit dem Melkzeug von der Seite her zwischen den Vorderbeinen und Hinterbeinen unter das Euter des Tieres wird das Melkzeug außerhalb des Bereiches zwischen den Hinterbeinen verfahren. Im Bereich zwischen den Hinterbeinen besteht eine stark erhöhte Verschmutzungsgefahr durch Tierexkremente. Dieser Bereich wird nun vermieden, was eine Verschmutzung des Melkzeugs und der Armeinrichtung erheblich verringert. Dadurch werden auch Reinigungszeiten und somit Kosten eingespart.

Ein weiterer Vorteil dieser kompakten Bauweise liegt darin, dass eine Nachrüstung des Platzteilers in bestehende Anlagen möglich ist, ohne Melkstände/Melkplätze zu verlieren.

Personal kann jederzeit und ohne durch Vorrichtungen, d.h. die Tragarmeinrichtung und Zubehör, behindert zu sein in den Melkvorgang eingreifen und hat leichten Zugriff. Zusätzliche Schutzvorrichtungen sind nicht erforderlich. Wenn die Melkstandanordnung ein Melkkarussell ist, kann dieses ohne Unterbrechung seine Drehung beibehalten, da das Melkpersonal z.B. von außen überall eingreifen kann. Eine Gefährdung des Melkpersonals wird erheblich reduziert.

In dem Vollautomatikbetrieb ist die Armeinrichtung von der Parkposition in der Arbeitsposition in eine Ansetzposition zum automatischen Ansetzen des Melkzeugs an die Zitzen des zu melkenden Tieres verstellbar, wobei das Melkzeug mindestens einen Positionssensor aufweist. Dabei wird das Melkzeug von der Armeinrichtung unter das Euter des zu melkenden Tieres bewegt, und die Zitzenbecher werden mithilfe des Positionssensors zur Zitzenerfassung, der Armeinrichtung und der Antriebseinheit automatisch an die Zitzen angesetzt. Dieser Betrieb wird auch als Automatikbetrieb bezeichnet.

Jeder der Zitzenbecher kann dabei einzeln positioniert werden

In dem Halbautomatikbetrieb ist die Armeinrichtung von der Parkposition in die Arbeitsposition verstellbar, wobei die Arbeitsposition eine feste Vorposition ist, die durch Anschlagmittel vorher festlegbar ist, wobei das Melkzeug in der Vorposition in einer für einen Melker aber auch für eine Robotereinrichtung günstigen Position steht. Dabei wird das Melkzeug mithilfe von einfachen mit einstellbaren Anschlägen versehenen Antriebsmitteln, z.B. Pneumatikzylinder, in eine für das Melkpersonal bzw. die Robotereinrichtung griffgünstige feste Vorposition unter das Euter des zu melkenden Tieres verstellt. Dann kann der hinter dem Tier stehende Melker die Zitzenbecher einfach und leicht ergreifen und sie an die Zitzen ansetzen. Sobald der erste Zitzenbecher an eine Zitze angesetzt ist, wird dies z.B. mithilfe eines pneumatischen Drucksensors erkannt und das Melkzeug aus der festen Vorposition in eine freie waagerechte Position freigegeben. In senkrechter Position verbleibt das Melkzeug wie beim automatischen Ansetzen in einer Schwebeposition. So ist gewährleistet, dass wie beim automatischen Ansetzen das Melkzeug nach dem Ansetzvorgang der Bewegung des zu melkenden Tieres folgt.

Diese Vorpositionierung des Melkzeugs mit der Armeinrichtung bei diesem so genannten semi-automatischen Melken ist so gestaltet, dass der Melker die Zitzenbecher zum Ansetzen an die Zitzen nur sehr wenig bewegen und so gut wie keine Kraft aufwenden muss. Dies spart Kraft und Zeit. Da in dieser Ausführung weder ein Positionssensor noch eine Antriebsvorrichtung zur Ansteuerung aller Zitzenpositionen erforderlich ist, sondern nur ein einfacher Antrieb, kann diese Ausführung vorteilhaft kostengünstig sein. Ein weiterer Vorteil dabei ist, dass diese semiautomatische Ausführung in die automatische Ausführung aufgerüstet werden kann. Dies ist aufgrund einer Mehrzahl gleicher Bauteile möglich.

In der Parkposition und in der Vorposition sind die Zitzenbecher des Melkzeugs aufrecht und dicht nebeneinander oberhalb eines Sammelstücks in einem Abstand zu diesem Sammelstück gehalten, wobei die Zitzenbecher des Melkzeugs aus der Vorposition in eine Melkposition, in der die Zitzenbecher des Melkzeugs begrenzt bewegbar sind, begrenzt lösbar sind, so dass der Abstand der Zitzenbecher des Melkzeugs zu dem Sammelstück in der Melkposition vergrößert ist, und wieder zurück in die Vorposition zurückbringbar sind. So stehen die Zitzenbecher in der Vorposition in einer so genannte Präsentierposition dicht nebeneinander zum leichten und schnellen Ergreifen durch einen Melker oder einen Roboter gebracht werden. Sie können dabei alle auf einmal ergriffen werden.

Erfindungsgemäß ist der Abstand eines jeden Zitzenbechers in der Parkposition und in der Vorposition zu dem Sammelstück durch jeweils mindestens ein Segmentelement bestimmt ist, welches jeweils zwischen einem jeden Zitzenbecher und dem Sammelstück angeordnet ist. Dabei weist das mindestens eine Segmentelement einen Durchgang auf, durch welchen mindestens ein Zugmittel geführt ist, das mit einem Ende an dem zugehörigen Zitzenbecher befestigt ist und mit dem anderen Ende an einer Betätigungseinrichtung angelenkt ist. Ein solches Zugmittel ist so leicht und platzsparend zu integrieren.

Das mindestens eine Zugmittel kann in einer Ausführung mittels der Betätigungseinrichtung in der Parkposition und in der Vorposition gespannt sein, wobei der zugehörige Zitzenbecher des Melkzeugs in der Parkposition und in der Vorposition aufrecht oberhalb des Sammelstücks in dem Abstand zu diesem Sammelstück gehalten ist. Dabei ist es von Vorteil, dass das Zugmittel z.B. ein Seil oder eine Kette ist, das/die leicht spannbar ist.

In einer anderen Ausführung ist das Sammelstück an einem Melkzeugträger in einer Verbindung zwischen dem Sammelstück und dem Melkzeugträger befestigt, wobei diese Verbindung in der Parkposition und der Vorposition fest zusammen gehalten ist und in der Melkposition gelockert ist. Hierbei ist es weiterhin von Vorteil, dass das Sammelstück in der Melkposition so gelockert ist, dass es relativ zu dem Melkzeugträger in bestimmten Grenzen bewegbar ist. Der Vorteil dieser Ausführung besteht darin, dass mit einem geringen Hub der Betätigungseinrichtung, der z.B. 15...20 mm betragen kann, nicht nur eine maximale Bewegungsfreiheit der Zitzenbecher in der Melkposition erreicht werden kann, sondern auch eine Bewegungsmöglichkeit des Sammelstücks relativ zu dem Melkzeugträger, begrenzt z.B. durch eine Langlochführung, beispielsweise ein Ansetzen der Zitzenbecher insbesondere bei so genannten Stufeneutern erleichtern kann

In einer Ausführung ist das Betätigungsmittel ein Pneumatikzylinder, ein Hydraulikzylinder oder ein elektromotorischer Antrieb.

Die Armeinrichtung weist einen Oberarm und einen damit verschwenkbar gekoppelten Unterarm auf. Dies ergibt eine einklappbare Konstruktion, die in dem Platzteiler in der Parkposition untergebracht und geschützt ist.

In einer anderen Ausführung kann der Unterarm als Melkzeugträger mit dem Melkzeug ausgebildet, woraus sich ein einfacher und kompakter Aufbau, insbesondere für ein Semi-Automatik-Ausführung ergibt.

In einer Ausführung ist die Armeinrichtung mit einer Antriebseinheit verbunden, welche am Platzteiler außerhalb der Reichweite oder oberhalb des zu melkenden Tieres angeordnet ist. Die Antriebseinheit kann aber auch unterhalb einer Melkplattform angeordnet sein. Damit können alle Antriebs- und Steuerelemente in dem Platzteiler zentral und integriert vorgesehen sein.

In einer weiteren Ausführung weist die Antriebseinrichtung mindestens einen Servomotor auf. Der mindestens eine Servomotor kann mit einem geeigneten Getriebe gekoppelt sein. In einer noch weiteren Ausführung weist die Antriebseinrichtung mindestens einen Direktantrieb auf.

Wenn die Antriebseinheit mindestens einen Torque-Motor aufweist, ergibt sich eine gewisse Elastizität. Ein Überlastschutz der Armeinrichtung kann dadurch unterstützt werden, z.B. gegen Tritte des zu melkenden Tieres. Da die Torque-Motoren kein Getriebe benötigen, kann die Armeinrichtung in gewisser Weise bei Tritten zurückweichen. Schäden werden verringert, sowohl an der Armeinrichtung als auch am Tier. Die Torque-Motoren können bei Manipulation der Armeinrichtung, z.B. durch Berührung durch die Beine des Tieres, nachgeben. Darüber hinaus ist auch ein Notmelken möglich, wenn bei einem stromlosen Zustand das Melkzeug vom Melker angelegt werden muss, da keine Widerstände von Getriebe und Motor dabei überwunden werden müssen. Auch wenn die Torque-Motoren antriebsmäßig stromlos sind, können ihre Winkelgeber eingeschaltet sein, wodurch immer eine Information über ihre Stellung und die Stellung der Armeinrichtung mit dem Melkzeug vorhanden ist.

Natürlich können auch andere Antriebe Verwendung finden, wie z.B. Pneumatikzylinder.

Ein weiterer Vorteil hierbei ist, dass sobald alle Zitzenbecher an die Zitzen des Euters angesetzt sind, die Motoren stromlos geschaltet werden können. Und dadurch eine Leichtgängigkeit der Armeinrichtung erreicht wird, wodurch das Melkzeug den Bewegungen des Tieres folgen kann. Dadurch entstehen keine negativen Hebelkräfte auf die Zitzen des Euters des Tieres.

Ein weiterer Vorteil bei dieser so genannten passiven Nachführung im Gegensatz zu einer aktiven Nachführung mithilfe der Antriebseinheit ist eine große Energieeinsparung, da Energie nur zum Ansetzen des Melkzeugs benötigt wird. Das kann z.B. nur ca. 5 % der Melkzeit eines Tieres sein.

In einer weiteren Ausführung ist die Armeinrichtung mit dem Melkzeug in der Parkposition in dem Platzteiler in einer Öffnung einer Verkleidung des Platzteilers (4) angeordnet. Dies ergibt einen kompakten und schmalen Aufbau.

In einer Alternative kann die Armeinrichtung mit dem Melkzeug innerhalb eines unterhalb des Melkstands angeordneten Abschnitts des Platzteilers in der Parkposition angeordnet sein. Dabei kann dieser Abschnitt des Platzteiles durch eine Melkplattform hindurch oder um einen Rand dieser herum gestaltet sein. Die Melkplattform kann dazu auch eine geeignete Aussparung besitzen.

Weiterhin kann die Öffnung der Verkleidung des Platzteilers mit der darin in der Parkposition angeordneten Armeinrichtung mit dem Melkzeug mit einer Schutzabdeckung verschließbar sein. Dadurch kann eine Verletzungsgefahr der Tiere, insbesondere von unruhigen Tieren, verringert werden.

In einer weiteren Ausführung kann in dem Platzteiler eine Reinigungseinrichtung für das Melkzeug angeordnet sein. Unter dem Begriff Reinigungseinrichtung ist auch zu verstehen, dass eine Innenreinigung der Zitzenbecher und eine Außenreinigung erfolgen können. Natürlich ist auch eine Desinfektion vor und nach dem Melken möglich. Ebenfalls kann eine Zwischendesinfektion des Melkzeugs erfolgen. Dadurch wird der kompakte Aufbau mit zusätzlichen Funktionen verbessert. Ein Zeitbedarf für die Reinigung wird verringert, d.h. Verfahrwege zu Reinigungsstellen entfallen, da dies an Ort und Stelle vorgenommen werden kann.

Zusätzlich kann auch eine Zitzenbehandlungseinrichtung an dem Melkzeug vorgesehen sein, welche vor und nach dem Melken die Zitzen desinfiziert.

In einer anderen Ausführung kann die Armeinrichtung eine Parallelführung für das Melkzeug aufweisen. Wenn die Parallelführung Schubstangen und/oder Koppelstangen aufweist, oder aus Parallelführungstriebelementen gebildet ist, sind weder Messnoch Antriebssysteme für eine Parallelführung notwendig. Besonders vorteilhaft ist ein schmaler und raumsparender Aufbau, wenn die Parallelführung innerhalb der Arme der Armeinrichtung angeordnet ist. Außerdem sind keine zusätzlichen Schutzeinrichtungen erforderlich.

In einer anderen Ausführung können die Parallelführungstriebelemente Zugmittel, wie beispielsweise Riemen, sein. Diese können einen Überlastschutz unterstützen.

In einer weiteren Ausführung weist die Armeinrichtung mindestens einen Zugmitteltrieb auf. Riemen als Zugmittel sind äußerst geräuscharm. Für eine genaue Positionierung sind Zahnriemen vorteilhaft.

In einer noch weiteren Ausführung bildet der Platzteiler mit seinen Funktionseinheiten und Komponenten eine vormontierte komplette Einheit. Dadurch kann eine schnelle Montage und Demontage sowie auch eine Nachrüstung von vorhandenen Melkstandanordnungen leicht erfolgen. Die Funktionseinheiten und Komponenten des Platzteilers sind die Armeinrichtung und das Melkzeug. Weitere können die Antriebseinheit(en), die Reinigungseinrichtung, die Schutzabdeckung usw. sein.

Eine Melkstandanordnung zum Melken von milchgebenden Tieren kann mit dem oben beschriebenen Platzteiler versehen sein.

Eine alternative Melkstandanordnung mit mindestens einem Melkstand zum Melken von milchgebenden Tieren und mindestens einem Platzteiler, wobei der Platzteiler annähernd parallel zu einer Längsachse des zu melkenden Tieres angeordnet ist, aufweisend eine Armeinrichtung mit einem Melkzeug, welche von einer Parkposition in eine Arbeitsposition und zurück verstellbar ist, ist so ausgebildet, dass die Armeinrichtung mit dem Melkzeug in der Parkposition unterhalb einer Melkplattform angeordnet ist und hinter dem zu melkenden Tier zwischen oder hinter dessen Hinterbeine in die Arbeitsposition verstellbar ist.

Eine weitere Ausführung einer Melkstandanordnung mit mindestens einem Melkstand zum Melken von milchgebenden Tieren und mindestens einem Platzteiler ist so ausgebildet, dass der Platzteiler an einer Längsseite des Melkstands angeordnet ist. Sie weist eine Armeinrichtung mit einem Melkzeug auf, welche von einer Parkposition in eine Arbeitsposition und zurück verstellbar ist. Die Armeinrichtung ist mit dem Melkzeug in der Parkposition unterhalb einer Melkplattform angeordnet und hinter dem zu melkenden Tier zwischen oder hinter dessen Hinterbeine in die Arbeitsposition verstellbar.

So kann eine noch schmalere Ausführung des Platzteilers ermöglicht werden.

Unter dem Begriff "hinter dessen Hinterbeine" ist zu verstehen, dass hiermit nicht der Bereich unterhalb des Tieres, also unter dessen Bauch zwischen Hinter- und Vorderbeine, gemeint ist, sondern der Bereich hinter dem Tier.

In weiterer Ausführung ist die Armeinrichtung in einem Halbautomatikbetrieb von der Parkposition in die Arbeitsposition verstellbar, wobei die Arbeitsposition eine feste Vorposition ist, die durch Anschlagmittel vorher festlegbar ist, wobei das Melkzeug in der Vorposition in einer für einen Melker oder eine Robotereinrichtung günstigen Position steht. So können einerseits Melker als auch Roboter den Ansetzvorgang bei einer gleichen Anordnung ausführen, wodurch die Vielseitigkeit erhöht wird.

Wenn die Armeinrichtung um eine Horizontalachse aus der Parkposition in die Arbeitsposition und zurück verschwenkbar ist, kann der Bereich oberhalb der Melkplattform während eines Tierverkehrs vollständig freigehalten werden. Außerdem ist die Armeinrichtung für das Tier unsichtbar.

In einer weiteren Ausführung ist vorgesehen, dass das mit der Armeinrichtung verbundene Melkzeug in der Parkposition der Armeinrichtung mit einer Reinigungseinrichtung in Kontakt bringbar ist, wodurch eine Platzersparnis und eine Verringerung von Bewegungsvorgängen erzielt wird.

In einer noch weiteren Ausführung ist das mit der Armeinrichtung verbundene Melkzeug in der Parkposition kopfüber angeordnet. Dadurch ergibt sich eine vereinfachte und platzsparende Gestaltung.

Außerdem kann die mindestens eine Antriebseinheit der Armeinrichtung in dem Platzteiler angeordnet sein.

In einer anderen Ausführung ist mindestens eine Robotereinrichtung vorgesehen, welche zum Ansetzen des Melkzeugs aus der Arbeitsposition in der Vorposition an die Zitzen des Euters eines zu melkende Tieres ausgebildet ist. Die Robotereinrichtung kann in Bezug auf das Tier von vorn durch die Beine, seitlich, von unten oder von hinten das in der Vorposition stehende Melkzeug ergreifen und ansetzen. Dies ergibt eine große Einsatzvielseitigkeit.

Die Melkstandanordnung kann ein Melkkarussell sein. Das Melkkarussell kann als Außenmelkkarussell ausgebildet sein.

Vorteilhafte Weiterbildungen und Ausgestaltungen des Melkzeugs bzw. des Melkstands sind Gegenstand der jeweiligen abhängigen Ansprüche.

Weitere Vorteile und Einzelheiten gehen aus dem in den Figuren der Zeichnung dargestellten Ausführungsbeispiel hervor. Hierbei zeigen:
- Figur 1: eine schematische Draufsicht auf ein Beispiel einer Melkstandanordnung mit Platzteilern;
- Figur 2-2a: schematische Ansichten eines zweiten Beispiels einer Melkstandanordnung mit Platzteilern;
- Figur 3: eine schematische Draufsicht eines dritten Beispiels einer Melkstandanordnung mit Platzteilern;
- Figur 4: eine schematische Perspektivansicht des Platzteilers mit einer Armeinrichtung in einer Parkposition;
- Figur 5: die Perspektivansicht nach Figur 4 mit der Armeinrichtung in einer Arbeitsposition;
- Figur 6: eine Seitenansicht des Platzteilers;
- Figur 7 und 8: der Platzteiler mit der Armeinrichtung in Parkposition in Draufsicht und Unteransicht;
- Figuren 9-11: der Platzteiler in Rückansicht, Draufsicht und Unteransicht mit der Armeinrichtung in Arbeitsposition;
- Figur 12: eine perspektivische Teilansicht des Platzteilers mit der Armeinrichtung in Arbeitsposition von unten gesehen;
- Figur 13a-13c: der Platzteiler mit einer Variation der Armeinrichtung in verschiedenen Positionen in einer Unteransicht mit einem zu melkenden Tier;
- Figur 13b: der Platzteiler mit der Variation der Armeinrichtung nach Figur 13a in Arbeitsposition in einer Vorposition;
- Figur 13c: der Platzteiler mit der Variation der Armeinrichtung nach Figur 13a in Arbeitsposition in einer Melkstellung;
- Figur 14a-14c: verschiedene Ansichten des Melkstands mit dem Platzteiler mit der Variation der Armeinrichtung nach Figur 13a;
- Figur 15a-15b: ein Melkzeug der Variation der Armeinrichtung nach Figur 13a in verschiedenen Positionen;
- Figur 15c-15d: das Melkzeug nach Fig. 15a-15b in einer Variation;
- Figur 15e-15f: Teilschnittansichten der Melkzeuge nach Figur 15a-15d;
- Figur 15g: eine vergrößerte Schnittansicht längs Linie XV in Figur 15f;
- Figur 16a-16b: schematische Schnittansichten eines vierten Beispiels einer Melkstandanordnung des Platzteilers mit einer weiteren Variation der Armeinrichtung in verschiedenen Positionen;
- Figur 17: eine schematische Draufsicht einer Variante des zweiten Beispiels nach Figur 2-2a;
- Figur 18: eine schematische Draufsicht einer Variante des dritten Beispiels nach Figur 3;
- Figur 19: eine schematische Draufsicht einer weiteren Variante des dritten Beispiels nach Figur 3; und
- Figur 20: eine schematische Draufsicht auf eine Variation des ersten Beispiels der Melkstandanordnung mit einer Robotereinrichtung.

In den Figuren sind gleiche bzw. ähnliche Funktionselemente mit gleichen Bezugszeichen versehen. In einigen Figuren ist eine Vertikalrichtung z angegeben.

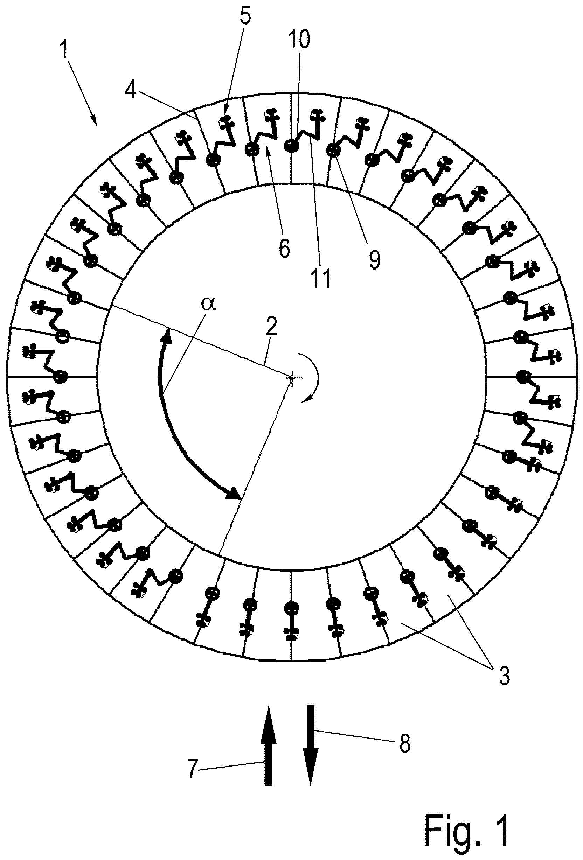

Figur 1 zeigt eine schematische Draufsicht auf ein erstes Beispiel einer Melkstandanordnung 1 mit Platzteilern nach einem ersten Beispiel.

Die Melkstandanordnung 1 ist nach Art eines so genannten Außenmelker-Karussells aufgebaut. Dabei stehen die zu melkenden Tiere mit ihrem Kopf zu einer Mitte, d.h. einem Drehpunkt 2, gerichtet. Das Karussell ist hier um den Drehpunkt 2 im Uhrzeigersinn drehbar. Natürlich kann das Karussell auch in einer anderen Ausführung gegen den Uhrzeigersinn drehbar sein. In diesem Beispiel sind sechsunddreißig Melkstände 3 am Umfang des Karussells angeordnet und durch Platzteiler 4 getrennt. Die Platzteiler 4 werden auch z.B. als Platzteiler bezeichnet und sind annähernd parallel zur Längsachse eines zu melkenden Tieres ausgerichtet. Die Melkstandanordnung 1 wird zum maschinellen Melken von milchgebenden Tieren, z.B. Kühe, mittels Melkzeugen 5 verwendet. Für jeden Melkstand 3 ist jeweils ein Melkzeug 5 vorgesehen, welches über eine Armeinrichtung 6 aus einer Parkposition in eine Arbeitsposition unter das Euter eines zu melkenden Tieres, z.B. einer Kuh, in einem Melkstand 3 verstellbar ist. Jedes Melkzeug 5 ist innerhalb eines Platzteilers 4 angeordnet. Die Positionen werden unten noch näher erläutert.

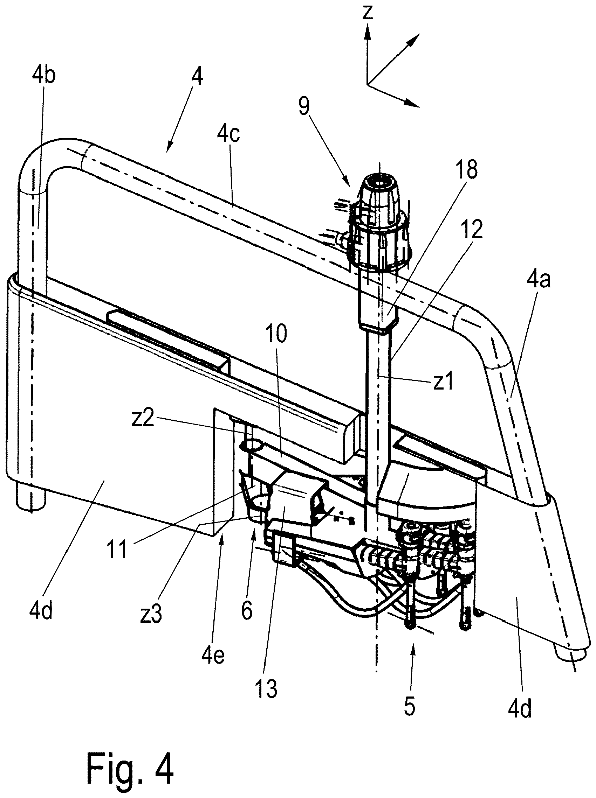

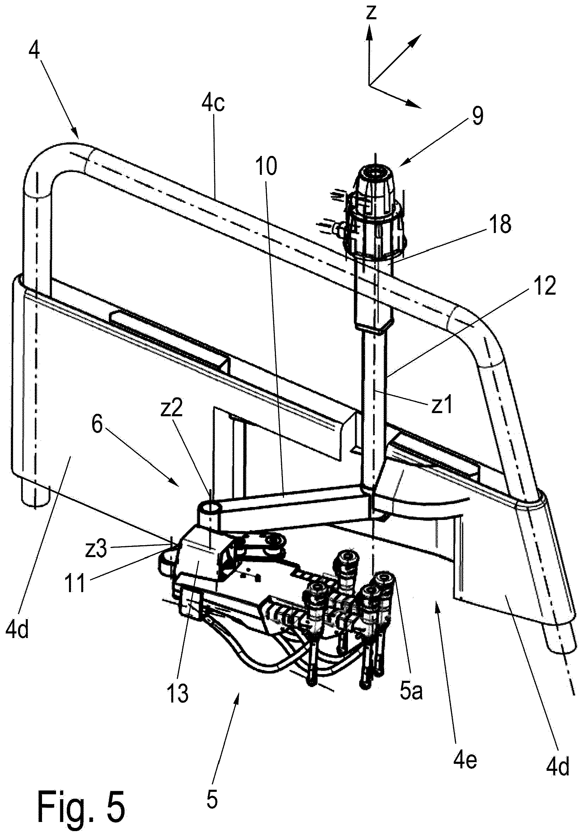

Das Karussell kann von den Tieren über einen Zugang 7 betreten und über einen Ausgang 8 wieder verlassen werden. Nachdem ein Tier einen Melkstand 3 betreten hat, ist es wichtig, dass das Tier eine vordefinierte Position einnimmt. Dies wird erreicht, indem die Platzteiler 4 einen eingegrenzten Melkstand 3 bilden. Wenn das Tier in dem Melkstand 3 steht, wird bevorzugt innerhalb eines Kreisabschnitts, der hier als Ansetzbereich α bezeichnet ist, das Melkzeug 5 aus der Parkposition in dem Platzteiler 4 in die Arbeitsposition von der Seite des Tieres zwischen seinen Vorderbeinen und Hinterbeinen unter den Euter des Tieres verstellt und an diesen mit Hilfe einer Positionssensors 13 (siehe Figur 4, 5) angesetzt. Ein Ansetzen kann aber prinzipiell an jeder Position des Karussells erfolgen, z.B. wenn ein Melkzeug wieder abgefallen ist. In dem ersten Beispiel der Platzteiler 4 an jedem Platzteiler 4 eine Antriebseinheit 9 angeordnet, welche mit der Armeinrichtung 6 in Verbindung steht. Nach abgeschlossenem Melkvorgang wird das Melkzeug 5 von dem zu melkenden Tier mittels Armeinrichtung 6 und Antriebseinheit 9 wieder abgenommen oder fällt von selbst in eine Warteposition bzw. Melkendeposition und wird danach in die Parkposition verstellt.

Alle Melkstände 3 sind am Außenumfang der Melkstandanordnung 1 von einem Melker frei zugänglich, so dass er jederzeit bei einem Melkvorgang eingreifen kann. Dieser Arbeitsbereich ist daher von zusätzlichen Vorrichtungen freigehalten. Eine Gefährdung des Melkers ist minimiert. Das Melkkarussell kann ständig in Drehbewegung verbleiben.

Das Melkzeug 5 wird seitlich an das zu melkenden Tier in dem Melkstand 3 heranbewegt und von der Seite des Tieres unter dessen Euter positioniert.

Die Armeinrichtung 6 weist einen Oberarm 10 und einen Unterarm 11 auf und hat die Funktion, das Melkzeug 5 gewichtsneutral zu tragen und so leichtgängig zu sein, dass sie den Bewegungen des zu melkenden Tieres folgt.

Die Armeinrichtung 6 wird unten noch näher in verschiedenen Variationen ausführlich beschrieben.

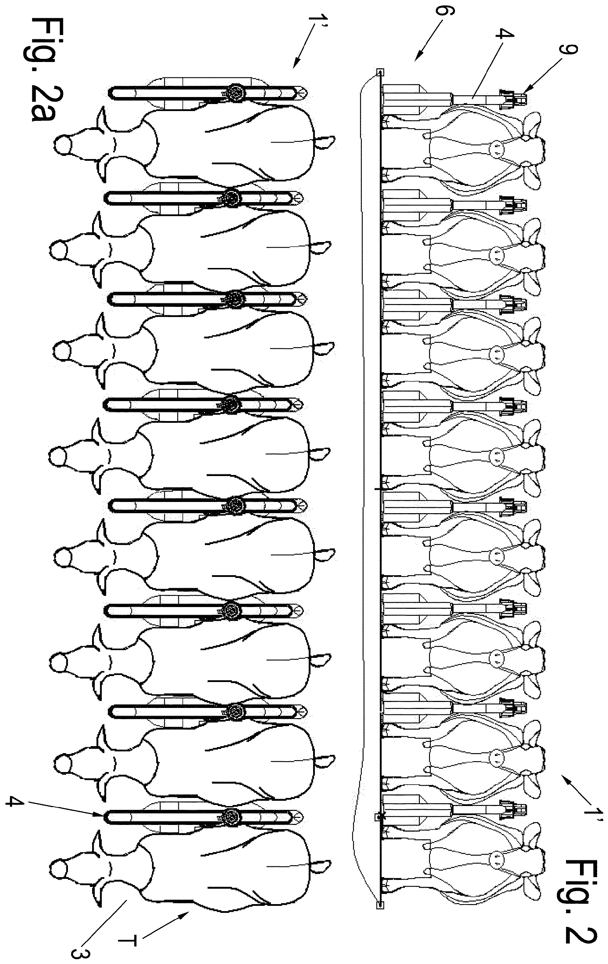

In Figur 2 und 2a sind schematische Ansichten eines zweiten Beispiels der Melkstandanordnung 1' mit den Platzteilern 4 dargestellt. Figur 2 zeigt eine Vorderansicht und Figur 2a stellt eine Draufsicht dar. Hier sind die Melkstände 3 nebeneinander angeordnet und auch durch Platzteiler 4 getrennt. In den Melkständen 3 befinden sich zu melkende Tiere T, welche hier Kühe sind. Auf jedem Platzteiler 4 ist eine Antriebseinheit 9 für jeweils eine Armeinrichtung 6 mit dem Melkzeug 5 angeordnet.

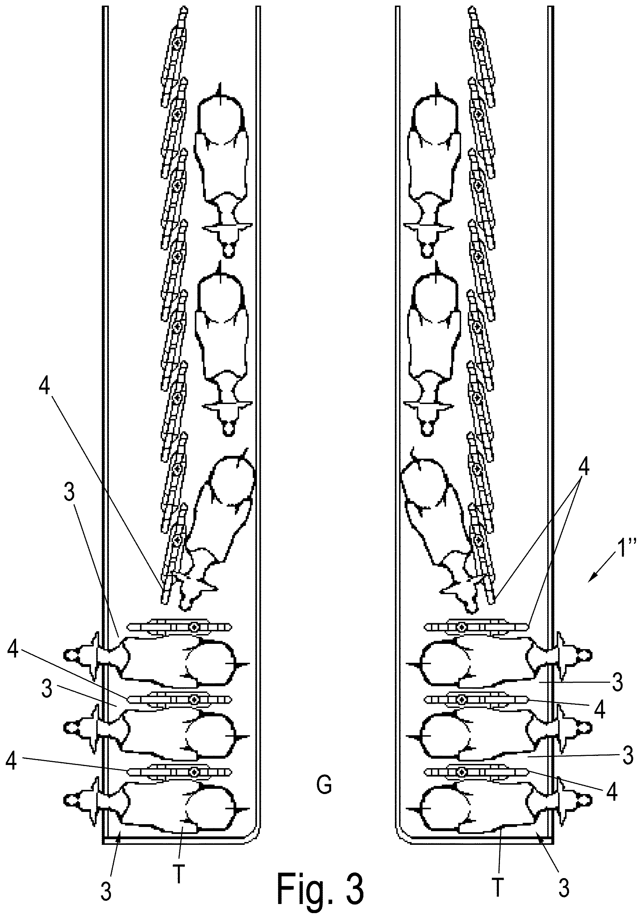

Figur 3 zeigt eine schematische Draufsicht eines dritten Beispiels der Melkstandanordnung 1" mit den Platzteilern 4. In diesem dritten Beispiel sind die Platzteiler 4 in einem U-förmigen Laufgang verschwenkbar angeordnet, wobei sie zunächst einen Gang bilden, indem sie in einer Linie verschwenkt sind und die Tiere T leiten. Sobald das erste Tier am Ende des U-förmigen Laufgangs angekommen ist, verschwenkt der erste links in der Figur 3 stehende Platzteiler so gegen den Uhrzeigersinn, dass ein Melkstand 3 gebildet wird. Das Verschwenken kann entweder gesteuert über einen Drehaktuator oder automatisch durch die Bewegung des Tieres T erfolgen. Diese Vorgänge laufen ab, bis alle Tiere in der Melkstandanordnung 1" platziert sind. Auch hier ist auf jedem Platzteiler 4 eine Antriebseinheit 9 für jeweils eine Armeinrichtung 6 mit dem Melkzeug 5 angeordnet. Auch ein Andocken (was weiter unten noch im Detail erläutert wird) von Antriebseinheiten 9', die über eine oben oder unten liegende Schiene verfahren werden, ist hier möglich.

Es sind hier zwei U-förmige Laufgänge spiegelbildlich angeordnet, welche durch eine so genannte Grube G getrennt sind. Die Grube G ist der Aufenthaltsbereich eines Melkers, der von hier beidseitig das Melkgeschehen überwachen und helfend eingreifen kann, ohne durch die Bewegung der Armeinrichtungen 6 behindert zu werden.

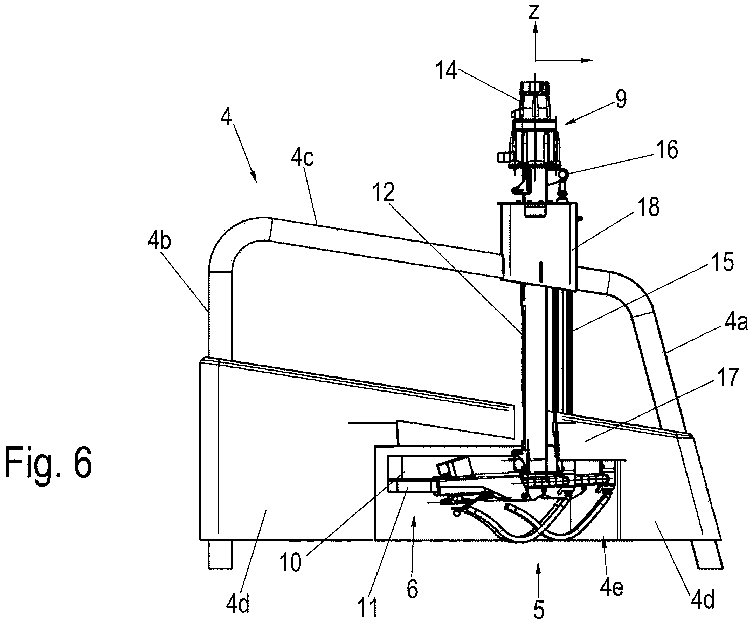

Figur 4 stellt eine schematische Perspektivansicht eines nicht erfindungsgemäßen Platzteilers 4 mit der Armeinrichtung 6 in der Parkposition dar. Figur 5 zeigt eine schematische Perspektivansicht des Platzteilers 4 mit der Armeinrichtung 6 in einer Arbeitsposition. Figur 6 stellt eine Seitenansicht dar.

Der Platzteiler 4 ist hier als ein Gehäuse ausgebildet, in welchem die gesamte Aktorik für die Armeinrichtung 6 und das Melkzeug 5, sowie Steuerelemente und Antriebseinheiten angeordnet sind. Der Platzteiler 4 ist so eine komplette Einheit, die an gegebener Stelle vormontierbar und komplett austauschbar oder nachrüstbar ist.

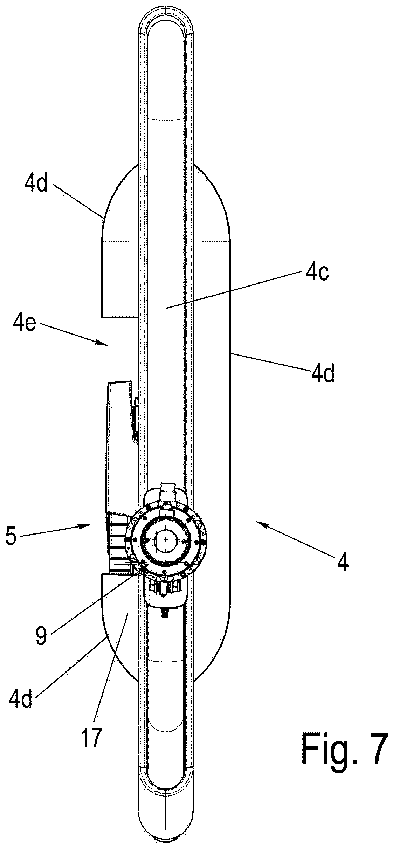

Der Platzteiler 4 ist hier eine Rohrkonstruktion mit einem vorderen Pfosten 4a, der leicht geneigt ist, und einem hinteren Pfosten 4b. Die Pfosten 4a, 4b sind über eine horizontal verlaufende Horizontalstange 4c verbunden. Etwa ab halber Höhe sind die Pfosten 4a, 4b von einer Verkleidung 4d umhüllt, die sich etwa bis zu den Füßen der Pfosten 4a, 4b erstreckt. Die Pfosten 4a, 4b und die Horizontalstange 4c können auch einstückig aus gebogenem Rohr hergestellt sein. In der Verkleidung 4d ist in der vorderen Hälfte eine Öffnung 4e eingebracht, wodurch sich eine Aufnahme innerhalb des Platzteilers 4 in der Verkleidung 4d ergibt, die auch zu den Seiten hin so ausgebaucht sein kann (siehe z.B. Fig. 7), dass sie das in ihr geparkte Melkzeug 5 aufnimmt und umgibt. Auf der Seite der Öffnung 4e kann eine zusätzliche, nicht gezeigte Schutzabdeckung zum Schutz des Melkzeugs 5 angebracht sein. Diese Schutzabdeckung kann bei Aktivierung des Melkzeugs 5 z.B. in Richtung des Platzteilers 4 verschoben werden, um die Öffnung 4e freizugeben. In einer weiteren Ausführung kann die Schutzabdeckung auch am Melkzeug 5 angebracht sein. So verbleibt die Schutzabdeckung fest am Melkzeug 5 und verfährt auch mit diesem. Sie kann auch in der Arbeitsposition verkleinert werden, z.B. durch automatisches Zusammenklappen oder-schieben.

Das Melkzeug 5 ist an dem Unterarm 11 der Armeinrichtung 6 angebracht. Das Melkzeug 5 weist in diesem Beispiel vier Zitzenbecher 5a auf. Jeder der vier Zitzenbecher 5a kann unabhängig von den anderen eine unterschiedliche Stellung einnehmen und automatisch fixiert oder frei beweglich geschaltet werden. Somit können die Zitzenbecher 5a im angesetzten Zustand individuelle Positionen einnehmen, da die Zitzenbecher 5a einzeln angesetzt werden. Außerdem ist eine nicht dargestellte individuelle Zitzenbechervorpositionierung denkbar, mit der dann mehrere Zitzenbecher gleichzeitig ansetzbar sind.

Das Melkzeug 5 ist außerdem mit einem Positionssensor 13 versehen, welcher hier als ein dreidimensionaler optischer Sensor ausgebildet ist. Mit dem Positionssensor 13 wird das Melkzeug 5 mittels der Armeinrichtung 6 und einer Antriebseinheit 9 aus der Parkposition in die Arbeitsposition nach Figur 5 verstellt.

In der Arbeitsposition kann das Melkzeug 5 verschiedene Stellungen einnehmen. Eine Ansetzstellung dient z.B. dazu, die Zitzenbecher 5a so zu positionieren, dass sie jeweils an eine entsprechende Zitze eines zu melkenden Tieres angehängt werden können. Während des Melkvorgangs unterstützt die Armeinrichtung 6 das Melkzeug 5 derart, dass das Gewicht des Melkzeugs den Melkvorgang nicht beeinträchtigt. Nach einer vollendeten Melkung werden die Zitzenbecher 5a wieder vom Euter des gemolkenen Tieres gelöst.

Eine Steuerung der Bewegungsvorgänge der Armeinrichtung 6 und des Melkzeugs 5 erfolgt mittels einer Steuereinrichtung, die hier nicht gezeigt ist. Die Steuereinrichtung ist mit dem Positionssensor 13 und der Antriebseinheit 9 verbunden. In diesem Beispiel ist die Antriebseinheit 9 auf einem oberen Ende einer Oberarmantriebswelle 12, welche eine Vertikalachse z1 aufweist, angebracht. Die Oberarmantriebswelle 12 und mit ihr die Antriebseinheit 9 und die Armeinrichtung 6 mit dem Melkzeug 5 sind in einer Führungseinheit 18 auf der Horizontalstange 4c des Platzteilers 4 befestigt und rotatorisch wie auch vertikal verstellbar geführt. Die Oberarmantriebswelle 12 ist mit ihrem unteren Ende mit einem Ende des Oberarms 10 der Armeinrichtung 6 fest verbunden. An ihrem oberen Ende ist die Oberarmwelle 12 mit einem Antrieb der Antriebseinheit 9 gekoppelt. In der als Hohlwelle ausgebildeten Oberarmwelle 12 ist eine weitere Welle zum Antrieb des Unterarms 11 angeordnet, die von einem weiteren Antrieb der Antriebseinheit 9 antreibbar ist. Die Oberarmantriebswelle 12 und die mit ihr verbundene Armeinrichtung 6 mit Melkzeug 5 sind durch einen Vertikalantrieb 15 (siehe Figur 6), z.B. ein Pneumatikzylinder, vertikal verstellbar. Der Vertikalantrieb 15 ist an einem unteren Ende mit dem Platzteiler 4 verbunden und mit einem oberen Ende über eine Anlenkung 16 im Bereich des oberen Endes der Oberarmwelle 12 an einer nicht näher beschriebenen Halterung der Antriebseinheit 9 angelenkt.

Die Antriebe der Antriebseinheit 9 können in unterschiedlicher Ausführung realisiert sein, wie beispielsweise Servomotoren mit entsprechenden Getrieben, aber auch Direktantriebsmotoren sind möglich. Außerdem sind sie z.B. als so genannte Torque-Motoren ausgebildet, wodurch eine gewisse Elastizität der Armeinrichtung 6 und des Melkzeugs 5 erreicht wird. Beispielsweise können Tritte des zu melkenden Tieres abgefedert werden.

Sowohl der Oberarm 10 als auch der Unterarm 11 sind auf diese Weise unabhängig voneinander gezielt antreibbar. Der Oberarm 10 und der Unterarm 11 sind relativ zueinander um eine Vertikalachse z2 verschwenkbar. Außerdem ist hier der Unterarm 11 mit dem Melkzeug 5 über ein Gelenk mit einer Vertikalachse z3 verschwenkbar verbunden. Die Vertikalachsen z1, z2 und z3 sind parallel zueinander angeordnet.

In einer Ausführung können der Unterarm 11 und auch das Melkzeug 5 (der Unterarm 11 kann in einer Ausführung auch gleichzeitig der Melkzeugträger sein, was unten noch näher erläutert wird) mittels Parallelführungen ohne eigenen Antrieb durch die Schwenkbewegung des Oberarms 10 verschwenkbar sein. Dazu ist z.B. nur ein Schwenkantrieb 14 der Antriebseinheit 9 erforderlich (siehe Figur 6).

Die Antriebseinheit 9 ist hier im oberen Bereich des Platzteilers 4 oberhalb eines zu melkenden Tieres außerhalb dessen Reichweite angeordnet. Das hat einerseits den Vorteil, dass die Antriebseinheit 9 im nicht trittgefährdeten Bereich liegt. Außerdem ist der obere Bereich über dem Tier besser vor Feuchtigkeit und den damit verbundenen Schäden geschützt. Weiterhin ist auch damit die besonders schmale Bauform des Platzteilers 4 möglich. Die Armeinrichtung 6 mit dem Melkzeug 5 ist im unteren Bereich des Platzteilers 4 so angeordnet, dass ein notwendiges Verschwenken der Armeinrichtung 6 mit dem Melkzeug 5 unterhalb des Bauches eines zu melkenden Tieres von der Seite her stattfinden kann. Dabei können auch die Beine des zu melkenden Tieres nicht getroffen werden.

In der Parkposition des Melkzeugs 5 und der Armeinrichtung 6 innerhalb der Verkleidung 4d des Platzteilers 4 kann das Melkzeug 5 unter eine Reinigungseinrichtung 17 bewegt werden, welche unten noch näher beschrieben wird.

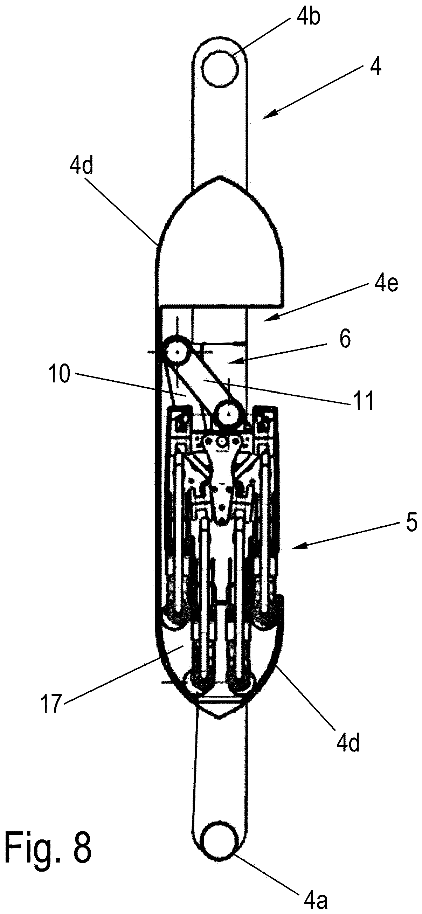

In der Figur 7 ist Platzteiler 4 mit der Armeinrichtung 6 in Parkposition in einer Draufsicht dargestellt. Es ist deutlich zu erkennen, dass die Verkleidung beidseitig einer Mittellängsachse des Platzteilers 4 ausgebaucht ist und Armeinrichtung 6 mit Melkzeug 5 vollständig aufnimmt. Figur 8 zeigt dazu eine Unteransicht.

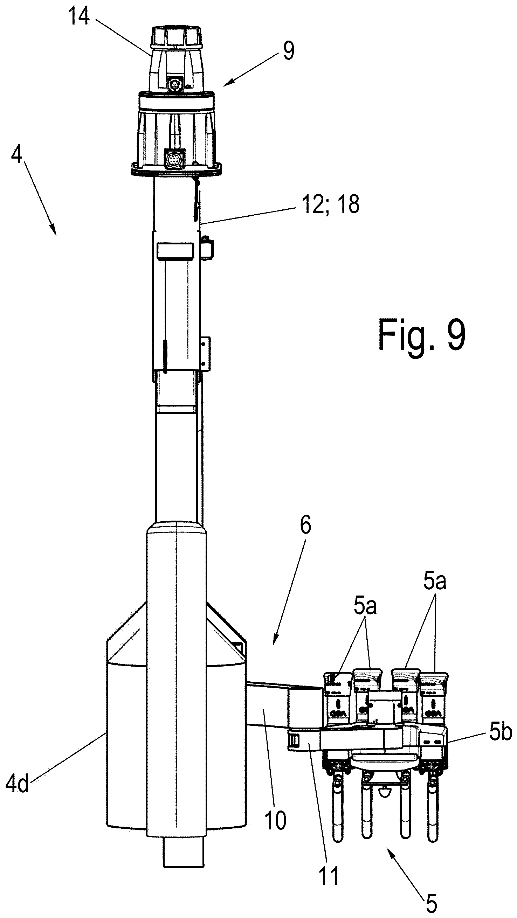

In Figur 9 ist der Platzteiler 4 in einer Rückansicht mit Melkzeug 5 in Arbeitsposition gezeigt. Die Verkleidung 4d des Platzteilers 4 ist im unteren Bereich, d.h. unterhalb eines Bauches eines seitlich davon stehenden zu melkenden Tieres ausgebaucht, so dass ein minimaler Bauraum eingenommen wird. Auf diese Weise können die Tiere T genau so nah nebeneinander stehen, als wenn kein Platzteiler 4 mit integrierter Armeinrichtung 6 und Melkzeug 5 vorhanden wäre. Die Antriebseinheit 9 ist hier mit einem Motor des Schwenkantriebs 14 gezeigt. Das Melkzeug 5 weist einen Melkzeugträger 5b auf, der mit dem Unterarm 11 in dem oben erwähnten Gelenk mit der Vertikalachse z3 verschwenkbar gekoppelt ist.

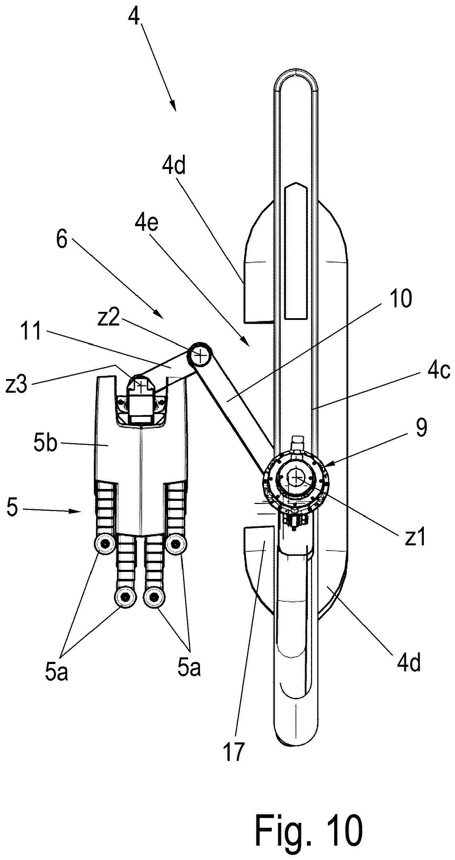

Figur 10 illustriert eine Draufsicht des Platzteilers 4 mit der Armeinrichtung 6 und dem Melkzeug 5 in Arbeitsposition. Das Melkzeug 5 verläuft annähernd parallel zum Platzteiler 4.

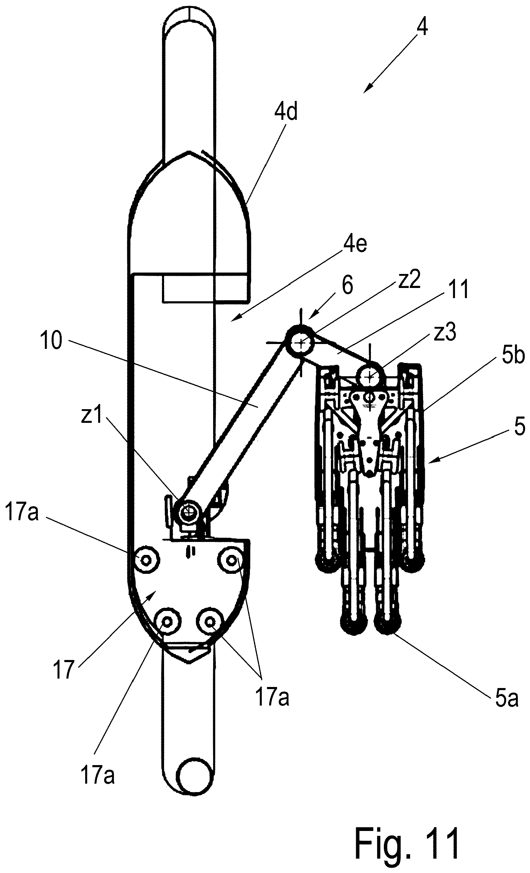

In Figur 11 ist in einer Unteransicht des Platzteilers 4 die Reinigungseinrichtung 17 mit Reinigungsdüsen 17a dargestellt. Wenn das Melkzeug 5 die Parkposition einnimmt, ist diese Position gleichzeitig eine so genannte Clean(ing)-in-Place- (CIP-) Position. Dabei fährt der Vertikalantrieb 15 die Armeinrichtung 6 mit dem Melkzeug 5 in Vertikalrichtung z nach oben, bis die Reinigungsdüsen 17a jeweils mit einem Zitzenbecher 5a des Melkzeugs 5 zusammenwirken, um diese mit einer Reinigungsflüssigkeit zu reinigen. Die Reinigungsdüsen 17a können auch mit Luft beschickt werden, um eine Trocknung der Zitzenbecher nach Reinigung zu bewirken. Es ist auch möglich, dass der Vertikalantrieb 15 das Melkzeug 5 und somit die Zitzenbecher 5a in Vertikalrichtung z um ein bestimmtes Maß auf und ab bewegt, wobei die Reinigungsdüsen 17a innerhalb der Zitzenbecher 5a z.B. reinigen können. Die Reinigungsdüsen 17a können dazu entsprechend ausgebildet sein, z.B. als Kegelstrahldüsen oder/und Radialstrahldüsen. Zusätzlich zu den Reinigungsdüsen 17a können in besonderer Ausgestaltung außerdem hier nicht dargestellte Außenreinigungsdüsen die Zitzenbecher 5a außen reinigen. Zusätzlich kann auch eine Desinfektion erfolgen.

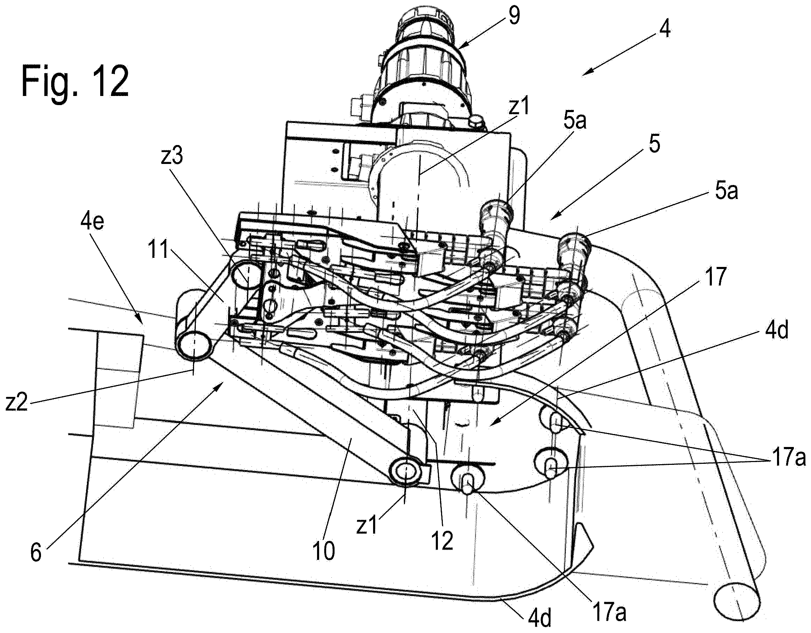

Figur 12 stellt eine perspektivische Teilansicht des Platzteilers 4 mit der Armeinrichtung 6 in Arbeitsposition von unten gesehen dar, wobei die Reinigungseinrichtung 17 mit den Reinigungsdüsen 17a unter der Verkleidung 4d gut zu erkennen ist.

Ein Melkstart wird ausgeführt, indem die Steuereinrichtung festgestellt hat, dass das zu melkende Tier in Melkposition steht. Dies kann z.B. durch Kamera oder Fußsensoren, Annäherungssensoren und dgl. festgestellt werden. Das Melken beginnt mit dem Ansetzvorgang in der Arbeitsposition des Melkzeugs 5. Eine Grobpositionierung in der Höhe kann durch einen Pneumatikzylinder als Vertikalantrieb 20 erfolgen. Dann erfolgt ein relatives Ansetzen der Zitzenbecher an die Zitzen des Euters des zu melkenden Tieres, wobei eine Positionierung mit dem Positionssensor 13 vorgenommen wird, indem die Armeinrichtung 6 eine Feinpositionierung des Melkzeugs 5 vornimmt.

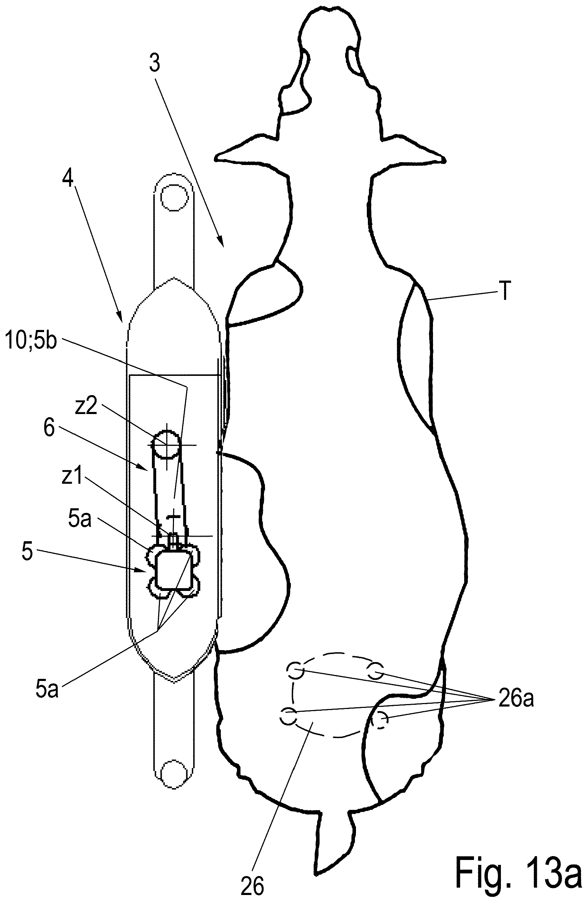

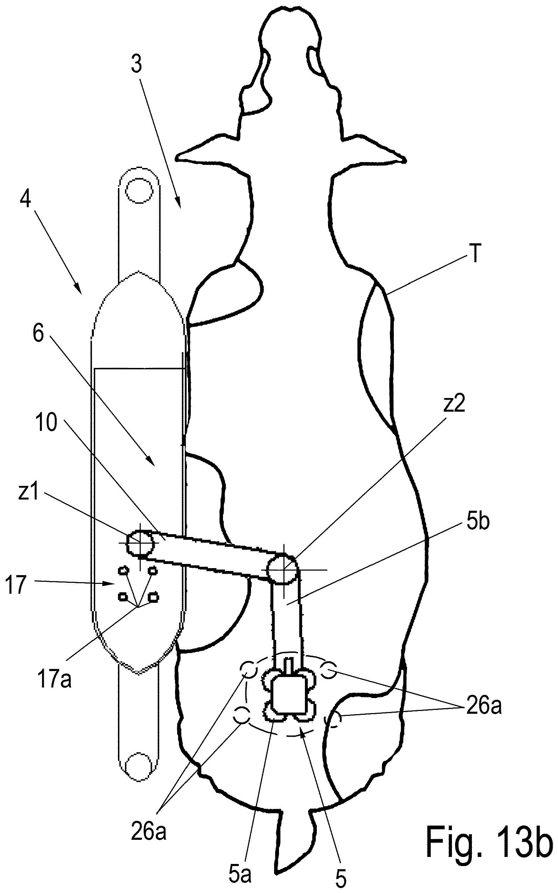

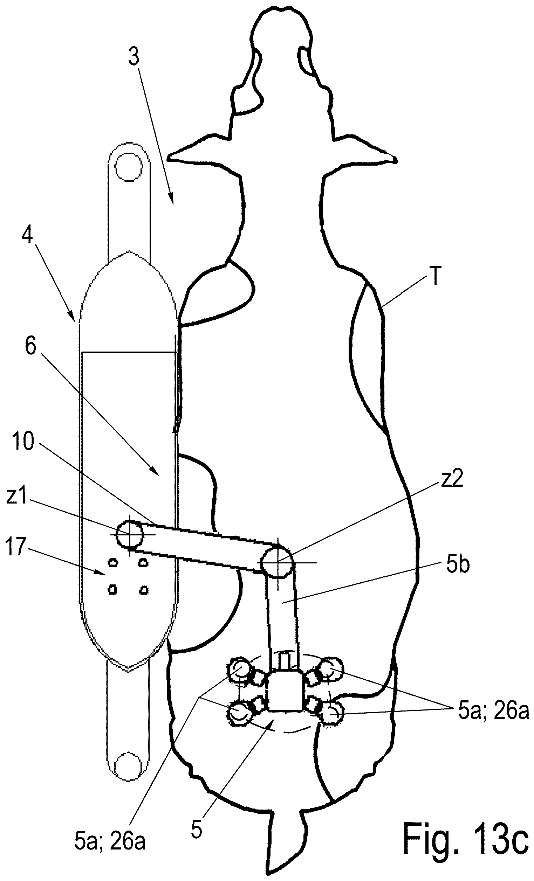

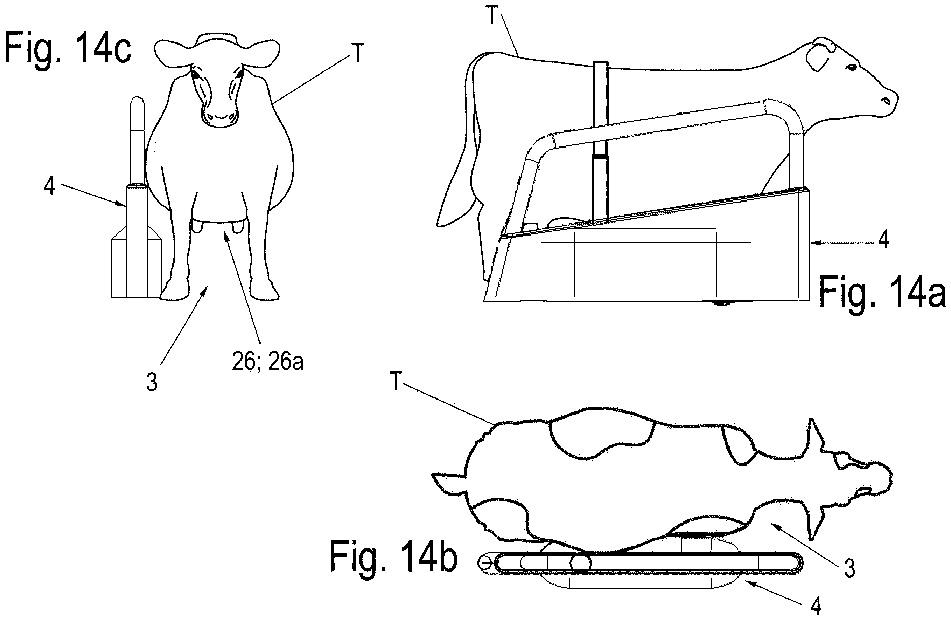

Figur 13a stellt den Platzteiler 4 mit einer Variation der Armeinrichtung 6 in Parkposition in einer Unteransicht mit einem zu melkenden Tier T dar. In Figur 13b ist die Variation der Armeinrichtung nach Figur 13a in Arbeitsposition in einer Vorposition gezeigt. Figur 13c zeigt die Variation der Armeinrichtung nach Figur 13a in Arbeitsposition in einer Melkstellung. Figur 14a zeigt dazu eine Seitenansicht, Figur 14b zeigt eine Draufsicht und Figur 14c stellt hierzu eine Vorderansicht des Melkstands 3 dar.

Das Tier T steht mit seiner Seite dicht am Platzteiler 4, wobei eine gedachte Längsachse des Tiers T annähernd parallel zu der Längsachse des Platzteilers 4 verläuft. Hier ist die Unterseite des Tiers T mit einem Euter 26 mit vier Zitzen 26a dargestellt.

Diese Variation der Armeinrichtung 6 besteht hier darin, dass der Unterarm als Melkzeugträger 5b ausgebildet ist und das Gelenk mit der Vertikalachse z3 nicht vorhanden ist. Der Oberarm 10 ist mit dem einen Ende des Melkzeugträgers 5b um die Vertikalachse z2 gelenkig verbunden. An dem anderen Ende des Melkzeugträgers 5b ist das Melkzeug 5 befestigt, das unten noch näher beschrieben wird.

Die Armeinrichtung 6 steht in Figur 13a in der Parkposition und gleichzeitig in einer Spülposition, wobei sich das Melkzeug 5 unter der Reinigungseinrichtung 17 in Kontakt mit dieser (wie oben beschrieben) befindet. Die Reinigungseinrichtung 17 mit ihren Reinigungsdüsen 17a ist in Figur 13b und 13c gezeigt.

Ein Melkstart kann ausgeführt werden, indem die Steuereinrichtung festgestellt hat, dass das zu melkende Tier T in Melkposition steht. Das Melken mit dieser Armeinrichtung 6 beginnt nun damit, dass die Armeinrichtung 6 das Melkzeug 5 in die in Figur 13b gezeigte Arbeitsposition unterhalb des Euters 26 des zu melkenden Tiers T bewegt. Dazu wird zuvor das Melkzeug 5 durch Verstellen der Armeinrichtung 6 in Richtung der Vertikalachse z1 von der Reinigungseinrichtung 17 soweit entfernt, dass ein Verschwenken unter das zu melkende Tier T erfolgen kann.

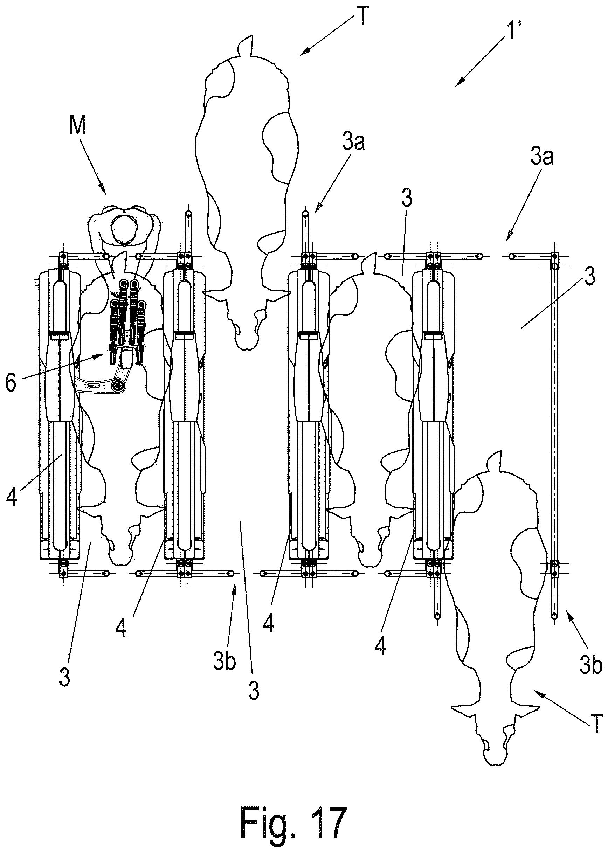

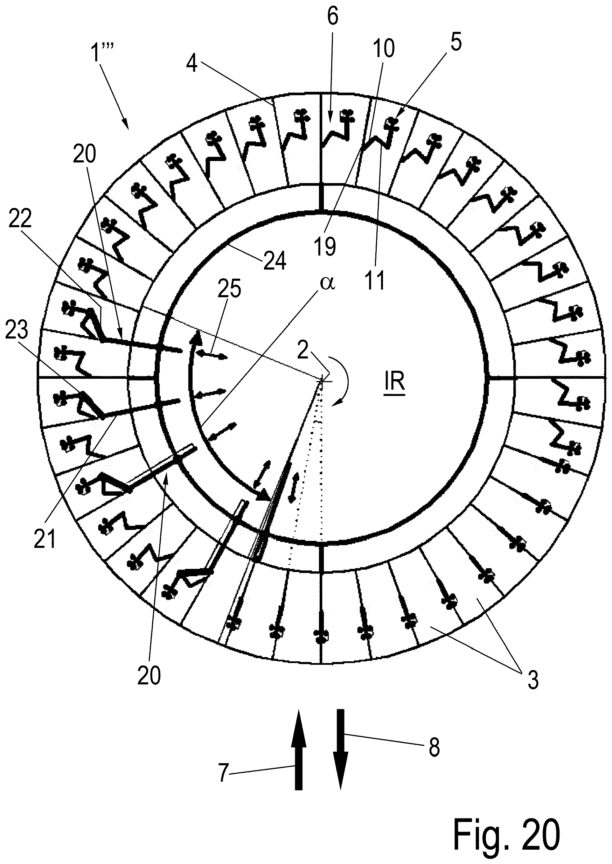

In der Arbeitsposition gemäß Figur 13b nimmt die Armeinrichtung 6 mit dem Melkzeug 5 eine Vorposition, die auch als Greifposition bezeichnet wird, ein. Daraufhin ergreift ein Melker M (siehe Figur 17-19) oder eine Robotereinrichtung 20 (ein Beispiel als Innenroboter siehe Figur 20) die Zitzenbecher 5a des Melkzeugs 5 gemeinsam (dies kann aber auch nacheinander oder auch paarweise erfolgen) und setzt sie an die Zitzen 26a des Euters 26 des zu melkenden Tiers T an. Mit anderen Worten, der Unterarm der Armeinrichtung 6 ist als Melkzeugträger 5b für das Melkzeug 5 ausgebildet. Der Melkzeugträger 5b mit dem Melkzeug 5 wird durch die Armeinrichtung 6 als ein hereinschwenkbares Melkbechermodul unter der Mitte des Euters 26 in die Arbeitsposition in eine für den Melker M oder eine Robotereinrichtung 20 zum Greifen günstige Position vorpositioniert. Der Melker M steht hinter oder seitlich des zu melkenden Tiers T und führt den Ansetzvorgang und nach durchgeführter Melkung den Abnahmevorgang der Zitzenbecher 5a des Melkzeugs 5 aus. Anstelle des Melkers M kann dies durch die Robotereinrichtung 20 von verschiedenen Stellungen (von hinten, von vorn durch die Beine des Tiers T oder von der Seite) erfolgen, wie im Zusammenhang mit Figur 20 noch beschrieben wird.

Hierbei können einfache Antriebe, wie z.B. Druckluftzylinder, als Schwenkantrieb 14 und Vertikalantrieb 15 genutzt werden. Natürlich sind auch Kombinationen mit den oben angeführten Motoren möglich.

In dieser Ausführung ist eine Positionierung mit dem Positionssensor 13 nicht erforderlich. Der Positionssensor 13 kann entweder für eine Grobpositionierung unterhalb des Tiers T unter dem Euter 26 vornehmen oder ganz entfallen. Dies ist ein so genannter Halb- oder Semiautomatikbetrieb.

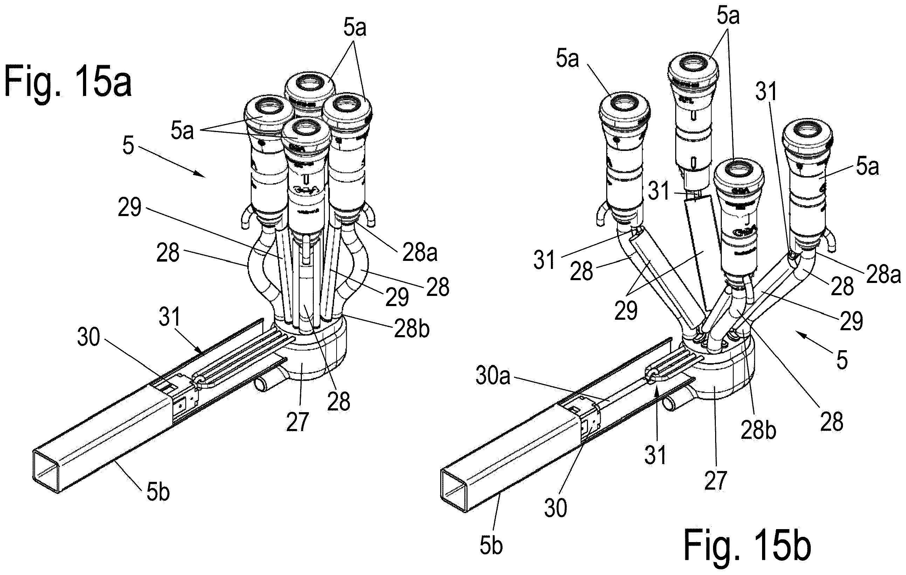

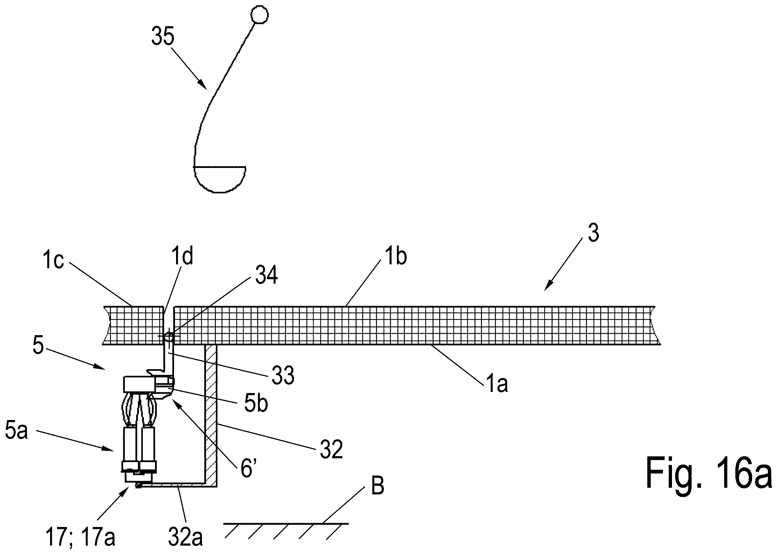

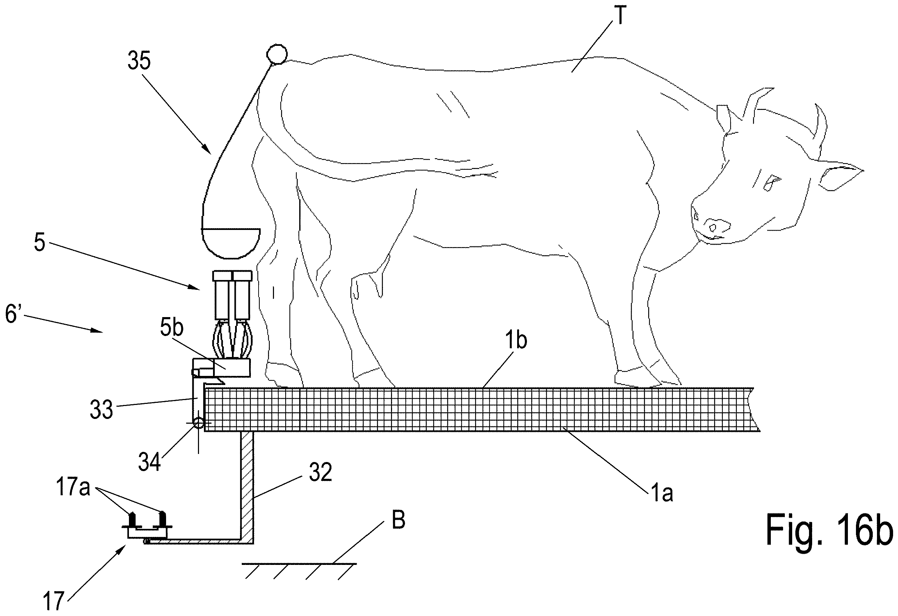

In den Figuren 15a bis g und 16a, b sind Armeinrichtungen 6, 6' für einen erfindungsgemäßen Platzteiler dargestellt.

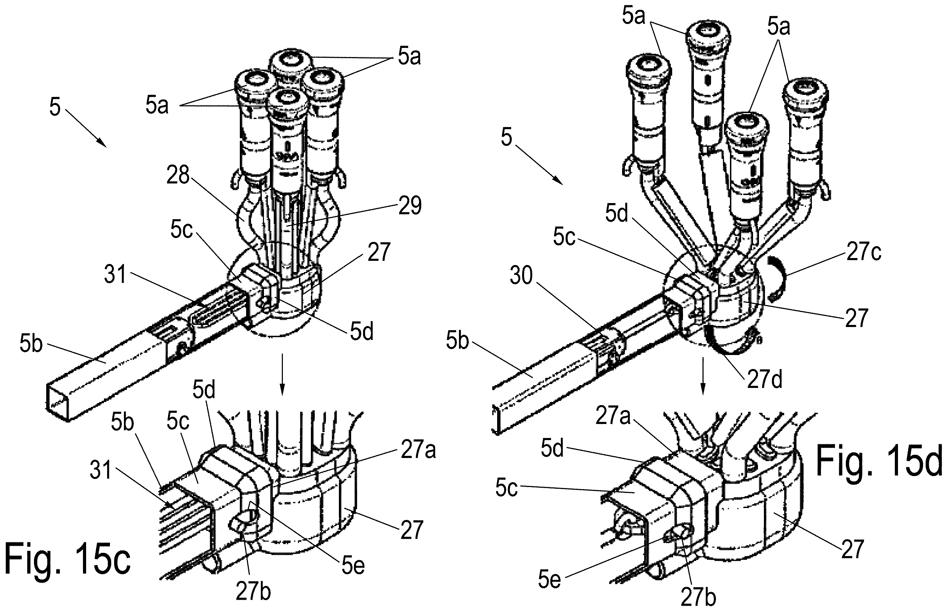

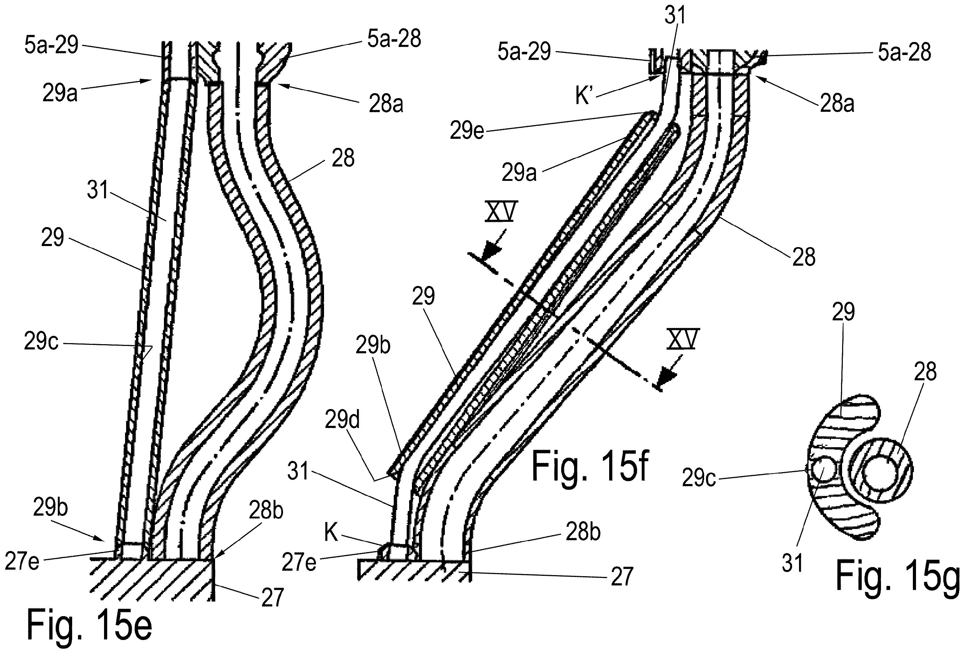

Als Melkzeug 5 wird hier ein konventionelles Melkzeug 5 verwendet, das in Figur 15a mit der Variation der Armeinrichtung 6 nach Figur 13a in der Vorposition bzw. Greifposition nach Figur 13b gezeigt ist. Figur 15b stellt das Melkzeug 5 in der Melkposition wie in Figur 13c angedeutet dar, wobei das zu melkende Tier T hier nicht gezeigt ist. Figur 15c zeigt das Melkzeug nach Fig. 15a-15b in einer Variation in der Vorposition und Figur 15d stellt dazu die Melkposition dar. Figur 15e zeigt eine Teilschnittansicht der Melkzeuge nach Figur 15a und 15c in der Vorposition, und in Figur 15f ist dazu die Melkposition gezeigt. Figur 15g zeigt eine vergrößerte Schnittansicht längs Linie XV in Figur 15f.

Das Melkzeug 5 weist hier vier Zitzenbecher 5a auf, welche auch als Melkbecher bezeichnet werden. In dem Melkzeug 5 sind die Funktionen Zitzenreinigung, Predippen und Postdippen integriert.

Der Melkzeugträger 5b ist in dem dargestellten Beispiel als quadratisches Vierkantrohr ausgebildet, wobei das Ende mit dem Gelenk und der Vertikalachse z2 als Anlenkung zum Oberarm 10 der Armeinrichtung 6 nicht gezeigt ist. Das andere Ende des Melkzeugträgers 5b ist mit einem Sammelstück 27, das vorzugsweise als ein Milchsammelstück gemäß der DE 10 2008 063 715 A1 ausgebildet ist (da hierbei ein Melkvakuum erst dann freigegeben wird, wenn die Zitzenbecher an die Zitzen 26a angesetzt sind), verbunden. Die Beschreibung der Funktion eines solchen Milchsammelstücks kann dem Dokument DE 10 2008 063 715 A1 entnommen werden.

Die Verbindung zwischen dem Melkzeugträger 5b und dem Sammelstück 27 ist in Figur 15a-15b als eine feste Verbindung gezeigt. In der Variation nach Figur 15c und 15d ist das Sammelstück 27 an dem Melkzeugträger 5b über eine Verbindung befestigt, welche in der Vorposition eine feste Verbindung bildet und in der Melkposition eine in bestimmten Grenzen Bewegungsfreiheit des Sammelstücks 27 ermöglicht. Dies wird unten im Zusammenhang mit Figur 15c-15d noch näher erläutert.

Jeder der vier Zitzenbecher 5a ist mit seiner Unterseite in einem Verbindungsabschnitt 5a-28 über ein Endstück 28a mit einer Schlaucheinheit 28 verbunden, welche ihrerseits mit einem weiteren anderen Endstück 28b mit dem Sammelstück 27 in Verbindung steht. Weiterhin ist jeder Zitzenbecher 5a an seiner Unterseite neben jedem Endstück 28a der jeweiligen Schlaucheinheit 28 mit einem Ende eines Zugmittels 31, das durch ein starres Segementelement 29 (auch als Mittelelement bezeichnet) verschiebbar hindurch geführt ist, in einem Verbindungsabschnitt 5a-29 befestigt. Die Zugmittel 31 können z.B. Seile, Ketten sein. Jedes Segmentelement 29 ist hier gerade und mit einem halbmond- oder bananenähnlichen Querschnitt (siehe Figur 15g) ausgebildet, der in der Mitte mit einem Durchgang 29c mit kreisrundem Querschnitt für das Zugmittel 31 versehen ist. Jede Schlaucheinheit 28 ist wie in Figur 15g gezeigt, zumindest an den Endstücken 28a-28b, von dem zugehörigen Segmentelement 29 etwa in einem Viertelkreis umgeben. Jedes Segmentelement 29 weist einen zum jeweiligen Zitzenbecher 5a weisenden Endabschnitt 29a und einen zum Sammelstück 27 weisenden Endabschnitt 29b auf und ist zwischen der Unterseite des jeweiligen zugehörigen Zitzenbechers 5a und der Oberseite des Sammelstücks 27 angeordnet.

Der Endabschnitt 29a eines jeweiligen Segmentelementes 29 steht mit dem Verbindungsabschnitt 5a-29 des jeweiligen Zitzenbechers 5a in der Vorposition durch die Zugkraft des Zugmittels 31 dergestalt in Kontakt, dass ein Außenkonus 29e des Endabschnitts 29a mit einem Innenkonus K' des Verbindungsabschnitts 5a-29 in Kontakt steht, wobei eine Zentrierung bewirkt wird (Figur 15e-15f).

Der Endabschnitt 29b eines jeweiligen Segmentelementes 29 steht in der Vorposition auf der Oberseite des Sammelstücks 27 mit einem Zentrierabschnitt 27e mit einer Durchgangsöffnung neben dem Endstück 28b der zugehörigen Schlaucheinheit 28 durch die Zugkraft des Zugmittels 31 in Kontakt. Der Zentrierabschnitt 27e weist einen Außenkonus K auf, der mit einem Innenkonus des Endabschnitts 29b des Segmentelementes korrespondiert und zusammenwirkt (Figur 15e-15f).

Das jeweilige Zugmittel 31, das aus dem unteren Ende des Segmentelementes 29 austritt, ist durch die Durchgangsöffnung des Zentrierabschnitts 27e hindurchgeführt und erstreckt sich dann unterhalb der Oberseite des Sammelstücks 27 durch die Verbindung mit dem Melkzeugträger 5b in diesen hinein. Weiterhin ist das Zugmittel 31 mit seinem Ende und den Enden der anderen Zugmitteln 31 zusammen an einem Ende einer Betätigungsstange 30a einer Betätigungseinrichtung 30, z.B. ein doppelt- oder rückwärts wirkender Druckluftzylinder, angelenkt. Die Betätigungseinrichtung 30 ist innerhalb des Melkzeugträgers 5b angeordnet, was durch eine z.T. aufgebrochen Darstellung des Melkzeugträgers 5b zu erkennen ist.

Die Zitzenbecher 5a werden nicht nur in der Parkposition, sondern auch in der Vorposition bzw. Greifposition in Figur 15a, 15c, 15e dicht nebeneinander aufrecht oberhalb des Sammelstücks 27 in einem Abstand zu diesem gehalten, wobei der Abstand durch die Länge der Segmentelemente 29 bestimmt ist. Auch in dieser aufrechten Greifposition werden alle Zitzenbecher 5a möglichst nah aneinander gehalten, damit z.B. der Melker M mit zwei Händen alle vier Zitzenbecher 5a umgreifen kann. Diese aufrechte Position wird durch die Zugkraft der Zugmittel 31 dadurch erreicht, dass die Betätigungseinrichtung 30 die Zugmittel 31 gespannt hat, wodurch die Zitzenbecher 5a gegen die Segmentelemente 29 und gegen die Oberseite des Sammelstücks 27 gezogen und festgehalten sind, bis sie vom Melker M oder einem Robotergreifer ergriffen werden. Sobald die Zitzenbecher 5a ergriffen sind, wird die Betätigungseinrichtung 30 aus ihrer Spannstellung (Figur 15a, 15c, 15e) gelöst, indem sie in eine Lösestellung gemäß Figur 15b, 15d, 15f verstellt wird. Dies kann erfolgen, indem der Melker M aktiv eine Bedienung, beispielsweise an einem Zitzenbecher 5a oder am Melkzeugträger 5b (auch ein Fußschalter kann möglich sein), ausführt. Bei der Robotereinrichtung 20 kann diese automatisch durch eine Steuereinrichtung erfolgen.

In der Lösestellung bzw. Melkstellung (Figur 15b, 15d, 15f) ist die Betätigungsstange 30a (z.B. eine Kolbenstange eines Druckluftzylinders) zum Sammelstück 27 hin verstellt und die Zugmittel 31 sind nicht mehr gespannt. So kann jeder Zitzenbecher 5a im Rahmen der freigegebenen Länge der Zugmittel 31 und der Schlaucheinheiten 28 frei bewegt und an die jeweilige Zitze 26a des zu melkenden Tiers T angesetzt werden. Ein besonderer Vorteil dieser Ausführung besteht darin, dass mit einem geringen Hub, z.B. 15...20 mm, der Betätigungsstange 30a der Betätigungseinrichtung 30 eine maximale Bewegungsfreiheit der Zitzenbecher 5a in der Lösestellung erreichbar ist.

In der Variation nach Figur 15c-15d ist das Sammelstück 27 im Bereich der Verbindung zu dem Melkzeugträger 5b mit einem Ansatz 27a versehen, welcher mit einem nicht dargestellten Innenraum eines Kragens 5d eines Tragendes 5c des Melkzeugträgers 5b korrespondiert und mit diesem in der Vorposition bzw. im gespannten Zustand der Zugmittel 31 eine feste, aber lösbare Verbindung bildet. Dabei verlaufen die Zugmittel 31 von dem Sammelstück 27 durch dessen Ansatz 27a, durch den Kragen 5d und das Tragende 5c des Melkzeugträgers 5b bis zu dem Anlenkungspunkt an der Betätigungsstange 30a der Betätigungseinrichtung 30. In einem Endbereich des Ansatzes 27a, der von dem Kragen 27b und zum Teil von dem Tragende 5c umgeben ist, ist der Ansatz 27a mit einem oder mehreren nach außen hervorstehenden und sich durch die Wandung des Tragendes 5c und zum Teil des Kragens 5d durch eine Führungsausnehmung 5e nach außen erstreckendes Führungselementen 27b versehen. Das in Figur 15d dargestellte Führungselement 27b ist nur beispielhaft und hier als ein Stift ausgebildet, der in der als Langloch in die Wandung des Tragendes 5c und des Kragens 5d eingeformten Ausnehmung 5e geführt ist. Diese Ausbildung ist auch auf der gegenüberliegenden Seite ausgeführt, was nicht gezeigt aber leicht vorstellbar ist.

Die als Langloch eingeformte Ausnehmung 5e erstreckt sich hier in Längsrichtung des Melkträgers 5b, führt das Führungselement 27b in einem durch das Langloch begrenzten Maße.
In der in Figur 15c gezeigten gespannten Stellung der Zugmittel 31, welches auch gleichzeitig die Parkposition bzw. die Vorposition ist, ist das Sammelstück 27 mit dem Ansatz 27a zur Bildung einer festen aber lösbaren Verbindung in den Kragen 5d und das Tragende 5c des Melkzeugträgers 5b eingezogen. In der gelösten Stellung, d.h. der Melkposition, sind die Zugmittel 31 wie in Figur 15d gezeigt gelockert, wobei nicht nur die Zitzenbecher 5a wie oben beschrieben freigegeben sind, und das Sammelstück 27 kann aus dem Tragende 5c und dem Kragen 5d um ein bestimmtes Maß in Längsrichtung des Melkzeugträgers 5b aus diesem herausgezogen werden. Dieses Maß ist wie oben beschrieben durch die Ausnehmung 5e begrenzt. Das Sammelstück 27 lässt sich in Bewegungsrichtungen 27c und 27d wie beispielsweise durch die Pfeile in dem oberen Teil der Figur 15d angedeutet in Grenzen bewegen. Diese Bewegungsfreiheit hat z.B. den Vorteil, dass ein Ansetzen der Zitzenbecher 5a bei so genannten Stufeneutern von zu melkenden Tieren erleichtert wird.

Figur 16a zeigt eine schematische Schnittansicht eines vierten Beispiels der Melkstandanordnung 1 des Platzteilers 4 mit einer weiteren Variation der Armeinrichtung 6' in einer Parkposition. Eine Arbeitsposition in Vorposition bzw. Greifposition wird in Figur 16b dargestellt.

Die Melkstände 3 dieses Beispiels können Melkstandanordnungen 1 nach den Figuren 1-3, 17-20 sein. Andere sind natürlich nicht ausgeschlossen. Hier wird das Beispiel eines Außenmelker-Karussels gezeigt, wobei die Melkstände 3 durch die Platzteiler 4 getrennt sind. Ein Platzteiler 4 ist hier nicht dargestellt, aber leicht vorstellbar.

In Figur 16a ist nur ein Melkstand 3 einer Melkplattform 1b mit einer Unterseite 1a gezeigt. Die Melkplattform 1b gehört z.B. zu der Melkstandanordnung 1 nach Figur 1. Der Melkstand 3 ist hier in der Stellung gezeigt, in welcher er auf der linken Seite neben einer Brücke1c gezeigt ist. Ein Drehpunkt 2, d.h. der Mittelpunkt, des Melkkarussells mit dem Melkstand 3 liegt in der Figur 16a und 16b auf der rechten Seite. Eine Drehung des Melkkarussells im Uhrzeigersinn um diesen nicht gezeigten, aber leicht vorstellbaren Drehpunkt 2 (siehe Figur 1) bedeutet eine Drehbewegung in die Zeichenebene der Figur 16a und 16b hinein, wobei die Kopfseite des Tiers T zum Drehpunkt 2 weist und sich das Tier T mit dem Melkstand 3 in Figur 16b von der Stellung des Tiers T aus gesehen nach links dreht. Die Brücke 1c dient zum Übergang eines zu melkenden Tiers T zum Betreten des Melkstands 3 bzw. zum Übergang von mehreren Tieren. Zwischen der Brücke 1c und der Melkplattform 1b ist ein Schlitz 1c in einer solchen Breite vorgesehen, welche für die Hufe der Tiere T nicht zu groß ist, um sich darin zu verfangen. Der Melkstand 3 ist außerdem mit einer nicht näher beschriebenen Kotrinne 35 versehen. In der in Figur 16a gezeigten Parkposition werden die Tiere T beim Betreten der Melkstände 3 von der Brücke 1c her in keiner Weise durch die Armeinrichtung 6' gestört, da diese unter den Rand der Brücke 1c und den Rand der Melkplattform 1b geklappt und somit für die Tiere T unsichtbar ist und ihre Bewegungen nicht beeinträchtigt.

Am Außenrand der Melkplattform 1b an deren Unterseite 1a unterhalb des Schlitzes 1d und eines Endbereiches der Brücke 1c ist die Armeinrichtung 6' angeordnet. Die Armeinrichtung 6' weist einen Haltearm 33 auf, der an einem oberen Ende im unteren Bereich des Schlitzes 1d in einem Gelenk mit einer Horizontalachse 34, die tangential zu der hier kreisrunden Melkplattform 1b verläuft, um diese Horizontalachse 34 verschwenkbar angebracht ist. Dieses Gelenk mit der Horizontalachse 34 kann an der Melkplattform 1b oder an einem Abschnitt des Platzteilers 4 angeordnet bzw. befestigt sein. Der Haltearm 33 ist an seinem unteren Ende mit dem Melkzeugträger 5b so fest verbunden, dass der Melkzeugträger 5b rechtwinklig zu dem Haltearm 33 angeordnet ist und das an dem Melkzeugträger 5b angebrachte Melkzeug 5 mit den Zitzenbechern 5a in dieser Parkposition nach unten weist. Der Haltearm 33 wird hier als Melkzeug-Präsentierhalter und als Schlauchhalter genutzt.

Das Melkzeug 5 ist z.B. so ausgestaltet, wie in Figur 15a-15e dargestellt, wobei der Melkzeugträger 5b eine entsprechende Länge aufweist. Die Betätigungseinrichtung 30 kann z.B. am oder im Haltearm 33 angeordnet sein. In der in Figur 16a gezeigten Parkposition sind die Zitzenbecher 5a des Melkzeugs 5 in der gespannten Stellung aneinander gedrückt. Außerdem stehen sie hier kopfüber mit den Reinigungsdüsen 17a der Reinigungseinrichtung 17 (siehe Figur 13b) in Kontakt, welche auf einer Halteplatte 32a über einen Vertikalhalter 32 an der Unterseite 1a der Melkplattform 1b befestigt ist. Der Vertikalhalter 32 kann auch an einem Abschnitt des Platzteilers 4 angebracht sein.

Sobald ein zu melkendes Tier T auf dem Melkstand 3 ist und sich die Melkplattform 1b von der Brücke 1c entfernt hat, wird die Armeinrichtung 6' aus der Parkposition in die Arbeitsposition in die Vorposition gebracht, was in Figur 16b dargestellt. Dazu wird der Haltearm 33 mit dem daran befindlichen Melkzeugträger 5b und dem Melkzeug 5 um 180° um die Horizontalachse 34 verschwenkt und liegt mit seinem Ende, an dem der Melkzeugträger 5b angebracht ist, mittels einem nicht näher bezeichneten Auflageabschnitt auf der Oberseite der Melkplattform 1b als Anschlag auf. Auf diese Weise ist die Greifposition erreicht, und der Melker M bzw. eine Robotereinrichtung 20 kann den Ansetzvorgang der Zitzenbecher 5a ausführen.

Der Antrieb des Haltearms 33 ist hier nicht gezeigt, aber es ist leicht vorstellbar, dass sich der Antrieb im Platzteiler 4 befindet und z.B. über eine Welle mit Getriebe den Haltearm 33 verschwenkt. Ein Abnahmevorgang nach dem Melken wird hier nicht weiter beschrieben, es ist verständlich, dass dies in umgekehrter Reihenfolge abläuft.

Der Haltearm 33 ist mittig zum Melkstand 3 angeordnet, d.h. am Rand der Melkplattform 1b mittig zwischen zwei Platzteilern 4 des Melkstands 3.

Es ist denkbar, dass der Platzteiler 4 nach unten verlängert ist und die Reinigungseinrichtung 17 und die Armeinrichtung 6' in der Parkposition aufnimmt. Dabei kann der Haltearm 33 aus der Parkposition in dem unteren Bereich des Platzteilers 4 zunächst bis in die mittige Stellung zwischen den Platzteilern 4 in eine Zwischenposition bewegt, z.B. verschwenkt, und um 180° um die Horizontalachse 34 in die Greifposition verschwenkt werden.

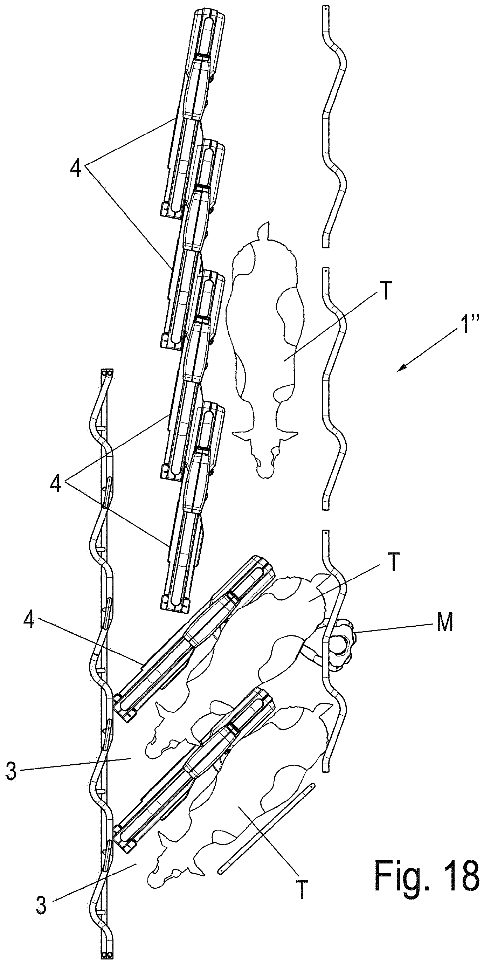

In Figur 17 ist eine schematische Draufsicht einer Variante des zweiten Beispiels nach Figur 2-2a gezeigt. Diese Variante wird auch als Durchtreiber-Melkstandanordnung 1' bezeichnet. Die Melkstände 3 sind durch die Platzteiler 4 seitlich getrennt. An den schmalen Rückseiten und Vorderseiten der Melkstände 3 sind jeweils Tore 3a, 3b angeordnet, wobei die Tore 3a an den Rückseiten geöffnet sind, um einen Einlass für ein Tier T in den Melkstand 3 zu bilden (zweiter Melkstand 3 von links in Figur 17). Das Tier T kann an der Vorderseite nicht heraustreten, da diese durch die Tore 3b verschlossen sind. Befindet sich ein Tier T vollständig im Melkstand 3, so werden die Tore 3a der Rückseite verschlossen (Erster und dritter Melkstand 3 von links in Figur 28). Ist der Melkvorgang beendet, öffnen sich die Tore 3b der Vorderseite, und die Tiere T können den Melkstand 3 wieder verlassen, wie bei dem vierten Melkstand 3 von links in der Figur 18 dargestellt ist.

Auch eine Art Fischgrätenaufbau ist natürlich auch möglich, wobei die Melkstände 3 durch die Platzteiler 4 getrennt sind. Dies zeigt Figur 18 in einer schematischen Draufsicht einer Variante des dritten Beispiels nach Figur 3. In Figur 3 sind die Melkstände 3 durch die Platzteiler 4 gebildet, welche zuvor so gegeneinander geklappt sind, dass ein Gang als Einlauf gebildet ist, wobei die gegeneinander geklappten Platzteiler 4 eine durchgehende Begrenzung dieses Einlaufs bilden. Erreicht das erste Tier T das Ende der Melkstandanordnung, das durch eine nicht näher bezeichnete Begrenzung gebildet ist, die in Figur 3 rechtwinklig und in Figur 18 in einem Winkel, z.B. 45°, zur Längsachse des Einlaufs steht, so wird der erste Platzteiler 4 im Uhrzeigersinn verdreht, bis er parallel zu dieser Begrenzung verläuft und mit ihr den ersten Melkstand 3 bildet. Auf diese Weise werden alle Melkstände durch die entsprechende Verschwenkung der Platzteiler 4 nacheinander gebildet. Durch die Schrägstellung der Tiere T, d.h. ihre gedachten Längsachsen verlaufen in dem Winkel zur Längsachse des Einlaufs, sind die hinteren Bereiche der Tiere T für einen Zugriff eines Melkers M von der Seite her frei. In Figur 18 ist diese jeweils die linke Seite eines Tiers T.

Es ist bei den Melkstandanordnungen 1' nach Figur 3 und 18 auch möglich, dass die Platzteiler 4 nicht gegeneinander geklappt sind, sondern in ihren Längsachsen verschiebbar angeordnet sind. Dies ist nicht gezeigt, aber leicht vorstellbar, wenn man nur die schon gebildeten Melkstände 3 betrachtet. Die Platzteiler 4 sind zuvor außerhalb des Bereichs der Tiere T schon in der parallelen Anordnung zu der Begrenzung (rechtwinklig oder schräg) aufgestellt. Sobald sich das erste Tier T mit seiner gedachten Längsachse neben der Begrenzung aufgestellt hat, wird der erste Platzteiler 4 in Richtung seiner Längsachse so in den Bereich der Tiere T hineingeschoben, dass er auf der anderen Seite des Tieres T steht und den Melkstand 3 bildet. Beim Verlassen der so gebildeten Melkstände 3 wird die Begrenzung in geöffnet (geschwenkt oder auch in Richtung ihrer Längsachse verschoben, und das erste Tier T kann den Melkstand 3 verlassen. Dann wird die der erste Platzteiler 4 wieder in Richtung seiner Längsachse in seine Ausgangsstellung zurück geschoben, usw.

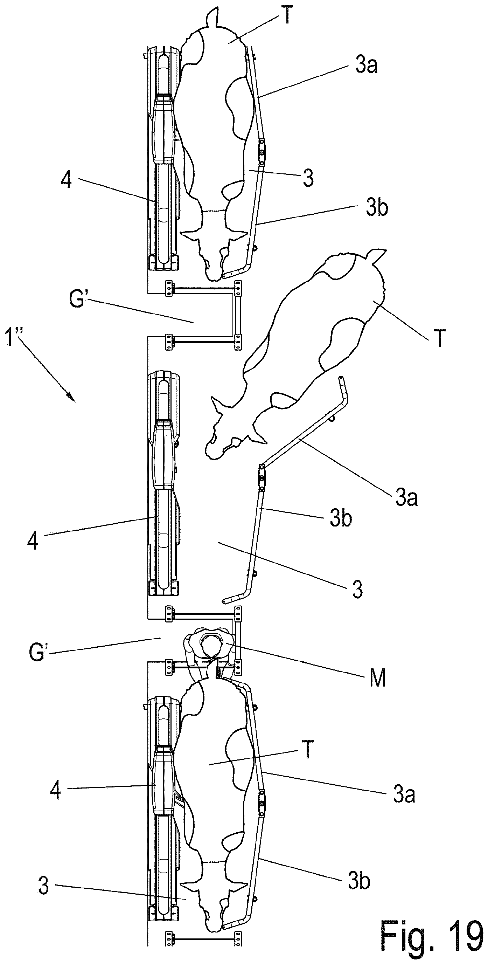

In Figur 19 ist eine schematische Draufsicht einer weiteren Variante des dritten Beispiels nach Figur 3 dargestellt. Diese Melkstandanordnung 1" wird auch als Tandemanordnung bezeichnet. Hier sind die Melkstände 3 hintereinander bzw. in Reihe angeordnet, wobei ihre schmalen Seiten durch die Grube G' für den Melker M beabstandet sind und jeweils Begrenzungen, z.B. Gitter, aufweisen. Die Längsseiten der Melkstände 3 werden zum Einen jeweils durch einen Platzteiler 4 und durch eine zweiteilige Begrenzung, die als Tore 3a, 3b ausgeführt sind, gebildet. Das Tor 3a des mittleren Melkstands 3 ist aufgeschwenkt, um ein Tier T in den Melkstand 3 zu lassen, wobei das Tor 3b geschlossen ist. Während des Melkvorgangs sind beide Tore 3a, 3b geschlossen. Nach dem Melken öffnet sich das zum Kopf des Tiers T weisende Tor 3b, und das Tier T kann den Melkstand 3 verlassen.

Schließlich zeigt Figur 20 eine schematische Draufsicht auf eine Variation des ersten Beispiels der Melkstandanordnung 1"' mit einer Robotereinrichtung 20.

Die Melkstandanordnung 1"' ist ein Außenmelker-Karussell, ähnlich wie im Zusammenhang mit Figur 1 oben beschrieben. Wenn das Tier T seine vordefinierte Position auf dem Melkstand 3 eingenommen hat, wird innerhalb eines Kreisabschnitts, der hier als Ansetzbereich α bezeichnet ist, das Melkzeug 5 aus der Parkposition in dem Platzteiler 4 seitlich zu dem zu melkenden Tier in die Arbeitsposition in die Vorposition unter das Euter des Tieres verstellt.

Eine Ansetztechnik zum Verstellen der Armeinrichtung 6 mit dem Melkzeug 5 ist in einem Innenraum IR der Melkstandanordnung 1"' in Gestalt einer Robotereinrichtung 20 als Innenroboter vorgesehen. Die Robotereinrichtung 20 umfasst in diesem Beispiel fünf Roboterarme mit jeweils einem Radialabschnitt 21 und einem Greifarm 22 mit Greifabschnitt 23, welche an einer Schiene 24 unabhängig voneinander bewegbar sind. Die Schiene 24 ist in diesem Beispiel oberhalb der Melkstände 3 außerhalb der Reichweite der Tiere und vor Verschmutzung geschützt angeordnet. Im Falle dieser Melkstandanordnung 1"', die hier als Melkkarussell mit dem Drehpunkt 2 ausgebildet ist, ist die Schiene 24 konzentrisch mit dem kreisförmigen Aufbau des Melckarussells mit dem Drehpunkt 2 des Melkkarussells als Mittelpunkt ebenfalls kreisförmig gestaltet. Auf diese Weise sind die Roboterarme bei einer Drehbewegung der Melkstandanordnung 1"' mit dieser Drehbewegung auch synchron mit bewegbar. Die Drehbewegung der Melkstandanordnung 1"' kann ununterbrochen aufrecht erhalten bleiben.

D.h., sobald ein Tier einen Melkstand 3 betreten hat, beruhigt und bereit zum Melken ist, was z.B. über eine geeignete Tiersensorik (z.B. Kamera, Bewegungssensor, Akustiksensor usw.) und -aktorik (z.B. Futterabgabe/annahme) erfassbar ist, wird der Roboterarm aus einer Ausgangsstellung im Innenraum IR, in welcher er nicht in die Melkstände 3 hineinreicht, in Radialrichtung 25 nach außen zwischen zwei Melkstände 3 im Bereich des Platzteilers 4 in seine Ansetzstellung bewegt, ergreift das in der Vorposition bzw. Greifposition unter dem Euter 26 (siehe Figur 13b) des Tieres stehende Melkzeug 5 und bewegt die gelösten Zitzenbecher 5a jeweils an die Zitzen 26a zum Ansetzen (siehe Figur 13c). Dabei wird eine Positionierung durch den Positionssensor 13, der z.B. am Greifabschnitt 23 angeordnet ist, ermöglicht. Die Armeinrichtung 6 hält das Melkzeug 5, dessen Zitzenbecher an den Zitzen des Euters 26 angesetzt werden. Dabei macht der Roboterarm nur eine Bewegung in Radialrichtung 25 direkt auf das Melkzeug 5 zu.

Sobald die Zitzenbecher 5a des Melkzeugs 5 angesetzt sind, löst sich der Roboterarm mit seinem Greifabschnitt 23 von der Armeinrichtung 6 und fährt in Radialrichtung 25 in den Innenraum IR zurück in seine Ausgangsstellung. Die Armeinrichtung 6 trägt das Melkzeug 5 und somit dessen Gewicht, wobei nur die Zitzenbecher 5a an den Zitzen des Euters angesetzt mit einem im Vergleich zu einem Gewicht des Melkzeugs 5 und der Armeinrichtung 6 geringen Gewicht einschließlich der Schläuche hängen. Während dieses Ansetzvorgangs bewegt sich das Melkkarussell ständig ohne Unterbrechung seiner Bewegung weiter, hier im Uhrzeigersinn um den Drehpunkt 2. Auch eine Drehbewegung im Gegenuhrzeigersinn in natürlich auch möglich. Der Roboterarm (bzw. die anderen ebenfalls) bewegt/bewegen sich an der Schiene 24 beim Ansetzvorgang, bevorzugt im Ansetzbereich a, in gleicher Drehrichtung und mit gleicher Winkelgeschwindigkeit synchron zum Melkkarussell. Die Schiene 24 ist oberhalb der Melkstände 3 außerhalb der Reichweite der Tiere und vor Verschmutzung geschützt angeordnet und vorzugsweise auf der Melkstandanordnung 1, d.h. auf dem sich bewegenden Teil davon, befestigt.

Die Armeinrichtung 6 weist den Oberarm 10 und den Unterarm 11 bzw. den als Melkzeugträger 5b ausgebildeten Unterarm auf und ist mit einem Ende des Oberarms 10 in einer Lagereinheit 19 bzw. der Führungseinheit 18 innerhalb des Platzteilers 4 um die Vertikalachse z1 (siehe Figur 6) verschwenkbar und vertikal längs der Vertikalachse z1 verstellbar geführt und gelagert und wie oben beschrieben von dem Schwenkantrieb 14 und dem Vertikalantrieb 15 bewegbar. Die Armeinrichtung 6 hat die Funktion, das Melkzeug 5 gewichtsneutral zu tragen und so leichtgängig zu sein, dass sie den Bewegungen des zu melkenden Tieres folgt. Die Armeinrichtung 6 kann auch wie in Figur 13a-13c oder wie in Figur 16a-16b gezeigt und beschrieben ausgebildet sein. Für den Fall gemäß Figur 16a-16b ist der Greifarm 22 der Robotereinrichtung 20 natürlich entsprechend angepasst, was leicht vorstellbar ist.

Alle Melkstände 3 sind am Außenumfang der Melkstandanordnung 1"' von einem Melker M vom Außenbereich her frei zugänglich, so dass er jederzeit bei einem Melkvorgang eingreifen kann. Dieser Arbeitsbereich ist daher von zusätzlichen Vorrichtungen freigehalten, wohingegen die Roboterarme nur im Innenraum IR in einem begrenzten Areal arbeiten. So wird der Melker M nicht behindert, wenn er die gesamte Melkstandanordnung 1"', steuern, pflegen und korrigierend eingreifen muss. Auch wenn ein manueller Eingriff des Melkers M notwendig wird, z.B. bei abgefallenen Zitzenbechern 5a des Melkzeugs 5, kann das Melkkarussell weiterlaufen.

Nach abgeschlossenem Melkvorgang wird das Melkzeug 5 von dem zu melkenden Tier T automatisch abgenommen oder fällt von selbst wieder in die gelöste Stellung in der Vorposition und wird schließlich wieder in die Parkposition wie oben beschrieben verschwenkt. Auch bei diesem Vorgang bewegt sich das Melkkarussell weiter.

Es ist natürlich auch möglich, dass eine anders gestaltete Robotereinrichtung in Bezug auf das Tier von der Seite, von hinten oder von unten den Ansetzvorgang des in der Vorposition stehenden Melkzeugs 5 vornimmt.

Die Erfindung ist nicht auf die oben dargestellten Beispiele beschränkt sondern im Rahmen der beigefügten Ansprüche modifizierbar.

So ist es z.B. denkbar, dass bei dem zweiten Beispiels der Melkstandanordnung 1' nach Figur 2 mehrere Reihen der nebeneinander angeordneten Melkstände 3 hintereinander oder sogar auch übereinander in mehreren Etagen angeordnet sein können.

Der Positionssensor 13 kann in einer Erweiterung oder nur als Kamera ausbildet z.B. auch Bilder über den Zustand des Euters des zu melkenden Tieres liefern und somit zur Kenntnis des Gesundheitszustandes des zu melkenden Tieres beitragen.

Jeder Melkstand 3 kann für sich aktiviert oder gesperrt werden. Auch bei gesperrten Melkständen 3 kann die Melkstandanordnung 1 weiter betrieben werden, z.B. ist ein Anhalten des Melkkarussells nicht erforderlich.

Jeder Melkstand 3 kann für ein Tier individuell vorbereitet werden, z.B. unterschiedliche vordefinierte Vorpositionen des Melkzeugs 5 mit der Armeinrichtung 6. Mit anderen Worten, bei der semi-automatischen Version kann die Vorposition des Melkzeugs 5 an das zu erwartende Tier in dem jeweiligen Melkstand 3 automatisch angepasst werden, wenn eine Erkennungseinrichtung (z.B. RFID) das jeweilige Tier erkennt, das den Melkstand 3 betritt. Außerdem kann es bei erkanntem Tier möglich sein, dass eine Vorpositionierung der Zitzenbecher 5a angepasst an die Eutermaße des erkannten Tieres vorgenommen werden kann.

Außerdem kann jeder Melkstand 3 eine Futtereinrichtung besitzen.

Das Melkzeug kann natürlich auch für milchgebende Tiere mit Eutern, die eine unterschiedliche Anzahl von Zitzen, z.B. 2, 3 oder 4, haben, verwendet werden.

Die Melkstandanordnung 1 als Melkkarussell kann so ausgebildet sein, dass auch mehrere 360° Drehungen für einen Melkvorgang eines bestimmten Tieres erfolgen können, wenn dies notwendig wird. Dann wird ein Auslass des Tieres aus dem Melkstand 3 verhindert, wenn dieser am Ausgang 8 ankommt.

### Bezugszeichen

- 1, 1', 1", 1"': Melkstandanordnung
- 1a: Unterseite
- 1b: Melkplattform
- 1c: Brücke
- 1d: Schlitz
- 2: Drehpunkt
- 3: Melkstand
- 3a, 3b: Tor
- 4: Platzteiler
- 4a, 4b: Pfosten
- 4c: Horizontalstange
- 4d: Verkleidung
- 4e: Aufnahme
- 5: Melkzeug
- 5a: Zitzenbecher
- 5a-28, 5a-29: Verbindungsabschnitt
- 5b: Melkzeugträger
- 5c: Tragende
- 5d: Kragen
- 5e: Führungsausnehmung
- 6, 6': Armeinrichtung
- 7: Zugang
- 8: Ausgang
- 9: Antriebseinheit
- 10: Oberarm
- 11: Unterarm
- 12: Oberarmantriebswelle
- 13: Positionssensor
- 14: Schwenkantrieb
- 15: Vertikalantrieb
- 16: Anlenkung
- 17: Reinigungseinrichtung
- 17a: Reinigungsdüse
- 18: Führungseinheit
- 19: Lagereinheit
- 20: Robotereinrichtung
- 21: Radialabschnitt
- 22: Greifarm
- 23: Greifabschnitt
- 24: Schiene
- 25: Radialrichtung
- 26: Euter
- 26a: Zitze
- 27: Sammelstück
- 27a: Ansatz
- 27b: Führungselement
- 27c, d: Bewegungsrichtung
- 27e: Zentrierabschnitt
- 28: Schlaucheinheit
- 28a, 28b: Endstück
- 29: Segmentelement
- 29a, 29b: Endabschnitt
- 29c: Durchgang
- 29d: Innenkonus
- 29e: Außenkonus
- 30: Betätigungseinrichtung
- 30a: Betätigungsstange
- 31: Zugelement
- 32: Vertikalhalter
- 32a: Halteplatte
- 33: Haltearm
- 34: Horizontalachse
- 35: Kotrinne
- α: Ansetzbereich
- B: Boden
- G, G': Grube
- IR: Innenraum
- K: Außenkonus
- K': Innenkonus
- M: Melker
- T: Tier
- z: Vertikalrichtung
- z1-3: Vertikalachse

## Patentansprüche

1. Platzteiler (4) einer Melkstandanordnung (1, 1', 1", 1"') für mindestens einen Melkstand (3) zum Melken von milchgebenden Tieren (T), wobei der Platzteiler (4) an einer Längsseite des Melkstands (3) angeordnet ist, aufweisend eine Armeinrichtung (6, 6') mit einem Melkzeug (5), welche aus einer Parkposition in eine Arbeitsposition und zurück verstellbar ist, wobei die Armeinrichtung (6, 6') mit dem Melkzeug (5) in der Parkposition in dem Platzteiler (4) angeordnet ist und in die Arbeitsposition in den Melkstand hinein verstellbar ist,
wobei die Armeinrichtung (6, 6') in einem Vollautomatikbetrieb von der Parkposition in der Arbeitsposition in eine Ansetzposition zum automatischen Ansetzen des Melkzeugs (5) an die Zitzen des zu melkenden Tieres (T) verstellbar ist, wobei das Melkzeug (5) mindestens einen Positionssensor (13) aufweist, oder wobei die Armeinrichtung (6, 6') in einem Halbautomatikbetrieb von der Parkposition in die Arbeitsposition verstellbar ist, wobei die Arbeitsposition eine feste Vorposition ist, die durch Anschlagmittel vorher festlegbar ist,
wobei Zitzenbecher (5a) des Melkzeugs (5) in der Parkposition und in der Vorposition aufrecht und dicht nebeneinander oberhalb eines Sammelstücks (27) in einem Abstand zu diesem Sammelstück (27) gehalten sind, und dass die Zitzenbecher (5a) des Melkzeugs (5) aus der Vorposition in eine Melkposition, in der die Zitzenbecher (5a) des Melkzeugs (5) begrenzt bewegbar sind, begrenzt lösbar sind, so dass der Abstand der Zitzenbecher (5a) des Melkzeugs (5) zu dem Sammelstück (27) in der Melkposition vergrößert ist, und wieder zurück in die Vorposition zurückbringbar sind,
**dadurch gekennzeichnet, dass**
der Abstand eines jeden Zitzenbechers (5a) in der Parkposition und in der Vorposition zu dem Sammelstück (27) durch die Länge jeweils mindestens eines starren Segmentelementes (29) bestimmt ist, welches jeweils zwischen einem jeden Zitzenbecher (5a) und dem Sammelstück (27) angeordnet ist, wobei
das mindestens eine Segmentelement (29) einen Durchgang (29c) aufweist, durch welchen mindestens ein Zugmittel (31) geführt ist, das mit einem Ende an dem zugehörigen Zitzenbecher (4a) befestigt ist und mit dem anderen Ende an einer Betätigungseinrichtung (30) angelenkt ist, und wobei
das mindestens eine Zugmittel (31) mittels der Betätigungseinrichtung (30) in der Parkposition und in der Vorposition gespannt ist, wobei der zugehörige Zitzenbecher (5a) des Melkzeugs (5) in der Parkposition und in der Vorposition aufrecht oberhalb des Sammelstücks (27) in dem Abstand zu diesem Sammelstück (27) gehalten ist.

2. Platzteiler (4) nach Anspruch 1, **dadurch gekennzeichnet, dass** das Sammelstück (27) an einem Melkzeugträger (5b) in einer Verbindung zwischen dem Sammelstück (27) und Melkzeugträger (5b) befestigt ist, wobei diese Verbindung in der Parkposition und der Vorposition fest zusammen gehalten ist und in der Melkposition gelockert ist.

3. Platzteiler (4) nach Anspruch 2, **dadurch gekennzeichnet, dass** das Sammelstück (27) in der Melkposition so gelockert ist, dass es relativ zu dem Melkzeugträger (5b) in bestimmten Grenzen bewegbar ist.

4. Platzteiler (4) nach einem der vorhergehenden Ansprüche, **dadurch gekennzeichnet, dass** das Betätigungsmittel (30) ein Pneumatikzylinder, ein Hydraulikzylinder oder ein elektromotorischer Antrieb ist.

5. Platzteiler (4) nach einem der vorhergehenden Ansprüche, **dadurch gekennzeichnet, dass** die Armeinrichtung (6, 6') einen Oberarm (10) und einen damit verschwenkbar gekoppelten Unterarm (11) aufweist.

6. Platzteiler (4) nach Anspruch 5, **dadurch gekennzeichnet, dass** der Unterarm (11) als Melkzeugträger (5b) mit dem Melkzeug (5) ausgebildet ist.

7. Platzteiler (4) nach einem der vorhergehenden Ansprüche, **dadurch gekennzeichnet, dass** die Armeinrichtung (6, 6') mit einer Antriebseinheit (9) verbunden ist, welche am Platzteiler (4) in einem oberen Bereich des Platzteilers (4) angeordnet ist.

8. Platzteiler (4) nach einem der Ansprüche 1 bis 6, **dadurch gekennzeichnet, dass** die Armeinrichtung (6, 6') mit einer Antriebseinheit (9) verbunden ist, welche unterhalb einer Melkplattform (1b) angeordnet ist.

9. Platzteiler (4) nach einem der vorhergehenden Ansprüche, **dadurch gekennzeichnet, dass** die Armeinrichtung (6, 6') mit dem Melkzeug (5) in der Parkposition in dem Platzteiler (4) in einer Öffnung (4e) einer Verkleidung (4d) des Platzteilers (4) angeordnet ist.

10. Platzteiler (4) nach Anspruch 9, **dadurch gekennzeichnet, dass** die Öffnung (4e) der Verkleidung (4d) des Platzteilers (4) mit der darin in der Parkposition angeordneten Armeinrichtung (6, 6', 6", 6"') mit dem Melkzeug (5) mit einer Schutzabdeckung verschließbar ist.

11. Platzteiler (4) nach Anspruch 9 oder 10, **dadurch gekennzeichnet, dass** in dem Platzteiler (4) eine Reinigungseinrichtung (17) für das Melkzeug (5) angeordnet ist.

12. Platzteiler (4) nach einem der vorhergehenden Ansprüche, **dadurch gekennzeichnet, dass** die Armeinrichtung (6, 6') eine Parallelführung für das Melkzeug (5) aufweist.

13. Platzteiler (4) nach einem der vorhergehenden Ansprüche, **dadurch gekennzeichnet, dass** der Platzteiler (4) mit seinen Funktionseinheiten und Komponenten eine vormontierte komplette Einheit bildet.

14. Melkstandanordnung (1, 1', 1", 1"') mit mindestens einem Melkstand (3) zum Melken von milchgebenden Tieren (T) und mindestens einem Platzteiler (4) nach einem der vorhergehenden Ansprüche.

15. Melkstandanordnung (1, 1', 1", 1"') mit mindestens einem Melkstand (3) zum Melken von milchgebenden Tieren (T) und mindestens einem Platzteiler (4) nach einem der Ansprüche 1 bis 6, wobei der Platzteiler (4) an einer Längsseite des Melkstands (3) angeordnet ist, aufweisend eine Armeinrichtung (6') mit einem Melkzeug (5), welche von einer Parkposition in eine Arbeitsposition in den Melkstand (3) hinein und zurück verstellbar ist, **dadurch gekennzeichnet, dass** die Armeinrichtung (6') mit dem Melkzeug (5) in der Parkposition unterhalb einer Melkplattform (1b) innerhalb eines unterhalb des Melkstands (3) angeordneten Abschnitts des Platzteilers (4) angeordnet ist.

16. Melkstandanordnung (1, 1', 1", 1"') nach Anspruch 15, **dadurch gekennzeichnet, dass** die Armeinrichtung (6') in einem Halbautomatikbetrieb von der Parkposition in die Arbeitsposition verstellbar ist, wobei die Arbeitsposition eine feste Vorposition ist, die durch Anschlagmittel vorher festlegbar ist, wobei das Melkzeug (5) in der Vorposition in einer für eine Robotereinrichtung (20) günstigen Position steht.

17. Melkstandanordnung (1, 1', 1", 1"') nach Anspruch 15 oder 16, **dadurch gekennzeichnet, dass** die Armeinrichtung (6') um eine Horizontalachse (34) aus der Parkposition in die Arbeitsposition und zurück verschwenkbar ist.

18. Melkstandanordnung (1, 1', 1", 1"') nach einem der Ansprüche 15 bis 17, **dadurch gekennzeichnet, dass** das mit der Armeinrichtung (6') verbundene Melkzeug (5) in der Parkposition der Armeinrichtung (6') mit einer Reinigungseinrichtung (17) in Kontakt bringbar ist.

19. Melkstandanordnung (1, 1', 1", 1"') nach einem der Ansprüche 15 bis 18, **dadurch gekennzeichnet, dass** das mit der Armeinrichtung (6') verbundene Melkzeug (5) in der Parkposition kopfüber angeordnet ist.

20. Melkstandanordnung (1, 1', 1", 1"') nach einem der Ansprüche 15 bis 19, **dadurch gekennzeichnet, dass** mindestens eine Antriebseinheit (9) der Armeinrichtung (6') in dem Platzteiler (4) angeordnet ist.

21. Melkstandanordnung (1, 1', 1", 1"') nach einem der Ansprüche 15 bis 20, **dadurch gekennzeichnet, dass** mindestens eine Robotereinrichtung (20) vorgesehen ist, welche zum Ansetzen des Melkzeugs (5) aus der Arbeitsposition in der Vorposition an die Zitzen (26a) des Euters (26) eines zu melkende Tieres (T) ausgebildet ist.

22. Melkstandanordnung (1, 1', 1", 1"') nach einem der Ansprüche 15 bis 21, **gekennzeichnet durch** ein Melkkarussell.

23. Melkstandanordnung (1, 1', 1", 1"') nach Anspruch 22, **dadurch gekennzeichnet, dass** das Melkkarussell ein Außenmelkkarussell ist.

## Claims

1. A space divider (4) of a milking parlor arrangement (1, 1', 1", 1"') for at least one milking parlor (3) for milking milk-producing animals (T), wherein the space divider (4) is arranged on a longitudinal side of the milking parlor (3), said space divider comprising an arm device (6, 6') with a milking cluster (5), which is adjustable from a parking position into a working position and back, wherein the arm device (6, 6') with the milking cluster (5) is arranged in the parking position in the space divider (4) and is adjustable into the working position,
wherein in a fully automatic operation, the arm device (6, 6') is adjustable from the parking position in the working position into a positioning position for automatically positioning the milking cluster (5) onto the teats of the animal (T) to be milked, wherein the milking cluster (5) has at least one position sensor (13), or wherein in a semiautomatic operation, the arm device (6, 6') is adjustable from the parking position into the working position, wherein the working position is a fixed preliminary position which can be determined beforehand by stop means,
wherein in the parking position and in the preliminary position, teat cups (5a) of the milking cluster (5) are held upright and close to one another above a collecting piece (27) at a distance from said collecting piece (27), and in that the teat cups (5a) of the milking cluster (5) are releasable to a limited extent from the preliminary position into a milking position, in which the teat cups (5a) of the milking cluster (5) are movable to a limited extent, and therefore the distance of the teat cups (5a) of the milking cluster (5) from the collecting piece (27) is increased in the milking position, and are bringable back again into the preliminary position,
**characterized in that**
the distance of each teat cup (5a) in the parking position and in the preliminary position from the collecting piece (27) is determined by in each case at least one segment element (29) which is arranged in each case between each teat cup (5a) and the collecting piece (27),
wherein the at least one segment element (29) has a passage (29c) through which at least one traction mechanism (31) is guided, said traction mechanism being fastened by one end to the associated teat cup (4a) and being coupled by the other end to an actuating device (30), and
wherein the at least one traction mechanism (31) is tensioned by means of the actuating device (30) in the parking position and in the preliminary position, wherein, in the parking position and in the preliminary position, the associated teat cup (5a) of the milking cluster (5) is held upright above the collecting piece (27) at the distance from said collecting piece (27).

2. The space divider (4) as claimed in claim 1, **characterized in that** the collecting piece (27) is fastened to a milking cluster carrier (5b) at a connection between the collecting piece (27) and the milking cluster carrier (5b), wherein said connection is held firmly together in the parking position and in the preliminary position and is loosened in the milking position.

3. The space divider (4) as claimed in claim 2, **characterized in that**, in the milking position, the collecting piece (27) is loosened in such a manner that it is movable within certain limits relative to the milking cluster carrier (5b).

4. The space divider (4) as claimed in one of the preceding claims, **characterized in that** the actuating means (30) is a pneumatic cylinder, a hydraulic cylinder or an electric motor drive.

5. The space divider (4) as claimed in one of the preceding claims, **characterized in that** the arm device (6, 6') has an upper arm (10) and a lower arm (11) which is coupled pivotably thereto.

6. The space divider (4) as claimed in claim 5, **characterized in that** the lower arm (11) is designed as a milking cluster carrier (5b) with the milking cluster (5).

7. The space divider (4) as claimed in one of the preceding claims, **characterized in that** the arm device (6, 6') is connected to a drive unit (9) which is arranged in an upper section of the space divider (4).

8. The space divider (4) as claimed in one of claims 1 to 6, **characterized in that** the arm device (6, 6') is connected to a drive unit (9) which is arranged below a milking platform (1b).

9. The space divider (4) as claimed in one of the preceding claims, **characterized in that**, in the parking position, the arm device (6, 6') with the milking cluster (5) is arranged in the space divider (4) in an opening (4e) in a cladding (4d) of the space divider (4).

10. The space divider (4) as claimed in claim 9, **characterized in that** the opening (4e) in the cladding (4d) of the space divider (4) with the arm device (6, 6', 6", 6"'), which is arranged therein in the parking position and has the milking cluster (5), is closeable with a protective covering.

11. The space divider (4) as claimed in claim 9 or 10, **characterized in that** a cleaning device (17) for the milking cluster (5) is arranged in the space divider (4) .

12. The space divider (4) as claimed in one of the preceding claims, **characterized in that** the arm device (6, 6') has a parallel guide for the milking cluster (5).

13. The space divider (4) as claimed in one of the preceding claims, **characterized in that** the space divider (4) together with the functional units and components thereof forms a preassembled, complete unit.

14. A milking parlor arrangement (1, 1', 1", 1"') with at least one milking parlor (3) for milking milk-producing animals (T), and with at least one space divider (4) as claimed in one of the preceding claims.

15. A milking parlor arrangement (1, 1', 1", 1"') with at least one milking parlor (3) for milking milk-producing animals (T), and with at least one space divider (4) as claimed in one of claims 1 to 6, wherein the space divider (4) is arranged on a longitudinal side of the milking parlor (3), said milking parlor arrangement comprising an arm device (6') with a milking cluster (5), which is adjustable from a parking position into a working position into the milking parlor (3) and back, **characterized in that**, in the parking position, the arm device (6') with the milking cluster (5) is arranged below a milking platform (1b) within a section of the space divider (4) which is arranged below the milking parlor (3).

16. The milking parlor arrangement (1, 1', 1", 1"') as claimed in claim 15, **characterized in that**, in semiautomatic operation, the arm device (6') is adjustable from the parking position into the working position, wherein the working position is a fixed preliminary position which is determinable beforehand by stop means, wherein, in the preliminary position, the milking cluster (5) is in a favorable position for a robot device (20).

17. The milking parlor arrangement (1, 1', 1", 1"') as claimed in claim 15 or 16, **characterized in that** the arm device (6') is pivotable about a horizontal axis (34) from the parking position into the working position and back.

18. The milking parlor arrangement (1, 1', 1", 1"') as claimed in one of claims 15 to 17, **characterized in that**, in the parking position of the arm device (6'), the milking cluster (5) connected to the arm device (6') is bringable into contact with a cleaning device (17).

19. The milking parlor arrangement (1, 1', 1", 1"') as claimed in one of claims 15 to 18, **characterized in that**, in the parking position, the milking cluster (5) connected to the arm device (6') is arranged upside-down.

20. The milking parlor arrangement (1, 1', 1", 1"') as claimed in one of claims 15 to 19, **characterized in that** at least one drive unit (9) of the arm device (6') is arranged in the space divider (4).

21. The milking parlor arrangement (1, 1', 1", 1"') as claimed in one of claims 15 to 20, **characterized in that** at least one robot device (20) is provided, said robot device being designed for positioning the milking cluster (5) in the preliminary position from the working position onto the teats (26a) of the udder (26) of an animal (T) to be milked.

22. The milking parlor arrangement (1, 1', 1", 1"') as claimed in one of claims 15 to 21, **characterized by** a rotary milking parlor.

23. The milking parlor arrangement (1, 1', 1", 1"') as claimed in claim 22, **characterized in that** the rotary milking parlor is an external rotary milking parlor.

## Revendications

1. Portillon de séparation (4) d'une installation de traite (1, 1', 1", 1"') pour au moins un poste de traite (3) pour la traite d'animaux donnant du lait (T), lequel portillon de séparation (4) est disposé sur un côté longitudinal du poste de traite (3), présentant un dispositif de bras (6 ,6') avec une trayeuse (5) qui peut être déplacé d'une position de rangement à une position de travail et retour, le dispositif de bras (6 ,6') avec la trayeuse (5) étant disposé dans le portillon de séparation (4) dans la position de rangement et pouvant être déplacé vers l'intérieur du poste de traite dans la position de travail,
dans lequel le dispositif de bras (6 ,6') peut être déplacé dans un mode entièrement automatique de la position de rangement à la position de travail dans une position d'application pour l'application automatique de la trayeuse (5) sur les tétines de l'animal (T) à traire, la trayeuse (5) présentant au moins un capteur de positionnement (13), ou le dispositif de bras (6 ,6') pouvant être déplacé dans un mode semi-automatique de la position de rangement à la position de travail, la position de travail étant une position avancée fixe qui peut être fixée à l'avance par des moyens de butée,
dans lequel des gobelets trayeurs (5a) de la trayeuse (5) sont tenus verticaux et serrés les uns à côté des autres au-dessus d'un collecteur (27) et à distance de ce collecteur (27) dans la position de rangement et dans la position avancée, et les gobelets trayeurs (5a) de la trayeuse (5) peuvent être éloignés de façon limitée de la position avancée à une position de traite dans laquelle les gobelets trayeurs (5a) de la trayeuse (5) peuvent être déplacés de façon limitée, de sorte que la distance entre les gobelets trayeurs (5a) de la trayeuse (5) et le collecteur (27) est agrandie dans la position de traite, et peuvent être ramenés à la position avancée,
**caractérisé en ce que**
la distance entre chaque gobelet trayeur (5a) et le collecteur (27) dans la position de rangement et dans la position avancée est déterminée par la longueur d'au moins un élément de segment (29) rigide qui est disposé entre chaque gobelet trayeur (5a) et le collecteur (27),
l'au moins un élément de segment (29) présentant un passage (29c) à travers lequel est guidé au moins un moyen de traction (31) qui est fixé à une extrémité au gobelet trayeur (4a) correspondant et articulé à l'autre extrémité à un dispositif d'actionnement (30), et
l'au moins un moyen de traction (31) étant mis en tension au moyen du dispositif d'actionnement (30) dans la position de rangement et dans la position avancée, le gobelet trayeur (5a) correspondant de la trayeuse (5) étant tenu vertical au-dessus du collecteur (27) à la distance par rapport à ce collecteur (27) dans la position de rangement et dans la position avancée.

2. Portillon de séparation (4) selon la revendication 1, **caractérisé en ce que** le collecteur (27) est fixé sur un support de trayeuse (5b) dans un assemblage entre le collecteur (27) et le support de trayeuse (5b), lequel assemblage est retenu solidement dans la position de rangement et la position avancée et desserré dans la position de traite.

3. Portillon de séparation (4) selon la revendication 2, **caractérisé en ce que** le collecteur (27) est desserré dans la position de traite de telle manière qu'il peut se déplacer dans certaines limites par rapport au support de trayeuse (5b).

4. Portillon de séparation (4) selon l'une des revendications précédentes, **caractérisé en ce que** le moyen d'actionnement (30) est un vérin pneumatique, un vérin hydraulique ou un entraînement à moteur électrique.

5. Portillon de séparation (4) selon l'une des revendications précédentes, **caractérisé en ce que** le dispositif de bras (6 ,6') présente un bras supérieur (10) et un bras inférieur (11) couplé à celui-ci de façon pivotante.

6. Portillon de séparation (4) selon la revendication 5, **caractérisé en ce que** le bras inférieur (11) est conçu comme un support de trayeuse (5b) avec la trayeuse (5).

7. Portillon de séparation (4) selon l'une des revendications précédentes, **caractérisé en ce que** le dispositif de bras (6 ,6') est relié à une unité d'entraînement (9) qui est disposée sur le portillon de séparation (4) dans une zone supérieure du portillon de séparation (4).

8. Portillon de séparation (4) selon l'une des revendications 1 à 6, **caractérisé en ce que** le dispositif de bras (6 ,6') est relié à une unité d'entraînement (9) qui est disposée en dessous d'une plate-forme de traite (1b).

9. Portillon de séparation (4) selon l'une des revendications précédentes, **caractérisé en ce que** le dispositif de bras (6, 6') avec la trayeuse (5) est disposé, dans la position de rangement dans le portillon de séparation (4), dans une ouverture (4e) d'un habillage (4d) du portillon de séparation (4).

10. Portillon de séparation (4) selon la revendication 9, **caractérisé en ce que** l'ouverture (4e) de l'habillage (4d) du portillon de séparation (4) avec le dispositif de bras (6 ,6', 6", 6"') avec la trayeuse (5) qui y est disposé dans la position de rangement peut être fermée par un cache de protection.

11. Portillon de séparation (4) selon la revendication 9 ou 10, **caractérisé en ce qu'**un dispositif de nettoyage (17) pour la trayeuse (5) est disposé dans le portillon de séparation (4).

12. Portillon de séparation (4) selon l'une des revendications précédentes, **caractérisé en ce que** le dispositif de bras (6 ,6') comporte un guidage parallèle pour la trayeuse (5).

13. Portillon de séparation (4) selon l'une des revendications précédentes, **caractérisé en ce que** le portillon de séparation (4) avec ses unités fonctionnelles et ses composants forme une unité complète préassemblée.

14. Installation de traite (1, 1', 1", 1"') avec au moins un poste de traite (3) pour la traite d'animaux donnant du lait (T) et avec au moins un portillon de séparation (4) selon l'une des revendications précédentes.

15. Installation de traite (1, 1', 1", 1"') avec au moins un poste de traite (3) pour la traite d'animaux donnant du lait (T) et avec au moins un portillon de séparation (4) selon l'une des revendications 1 à 6, dans laquelle le portillon de séparation (4) est disposé sur un côté longitudinal du poste de traite (3), présentant un dispositif de bras (6') avec une trayeuse (5) qui peut être déplacée d'une position de rangement à une position de travail dans le poste de traite (15) et retour, **caractérisée en ce que** dans la position de rangement, le dispositif de bras (6') avec la trayeuse (5) est disposé en dessous d'une plate-forme de traite (1b) à l'intérieur d'une partie du portillon de séparation (4) disposée en dessous du poste de traite (3).

16. Installation de traite (1, 1', 1", 1"') selon la revendication 15, **caractérisée en ce que** le dispositif de bras (6') être déplacé dans un mode semi-automatique de la position de rangement à la position de travail, la position de travail étant une position avancée fixe qui peut être fixée à l'avance par des moyens de butée, la trayeuse (5) se trouvant, dans la position avancée, dans une position favorable pour un dispositif de robot (20).

17. Installation de traite (1, 1', 1", 1"') selon la revendication 15 ou 16, **caractérisée en ce que** le dispositif de bras (6') peut pivoter autour d'un axe horizontal (34) de la position de rangement à la position de travail et retour.

18. Installation de traite (1, 1', 1", 1"') selon l'une des revendications 15 à 17, **caractérisée en ce que** la trayeuse (5) reliée au dispositif de bras (6') peut être mise en contact avec un dispositif de nettoyage (17) dans la position de rangement du dispositif de bras (6').

19. Installation de traite (1, 1', 1", 1"') selon l'une des revendications 15 à 18, **caractérisée en ce que** la trayeuse (5) reliée au dispositif de bras (6') est disposée en hauteur dans la position de rangement.

20. Installation de traite (1, 1', 1", 1"') selon l'une des revendications 15 à 19, **caractérisée en ce qu'**au moins une unité d'entraînement (9) du dispositif de bras (6') est disposée dans le portillon de séparation (4).

21. Installation de traite (1, 1', 1", 1"') selon l'une des revendications 15 à 20, **caractérisée en ce qu'**il est prévu au moins un dispositif de robot (20) qui est conformé pour amener la trayeuse (5) de la position de travail à la position avancée et l'appliquer sur les tétines (26a) du pis (26) d'un animal (T) à traire.

22. Installation de traite (1, 1', 1", 1"') selon l'une des revendications 15 bis 21, **caractérisée en ce qu'**elle comporte un manège de traite.

23. Installation de traite (1, 1', 1", 1"') selon la revendication 22, **caractérisé en ce que** le manège de traite est un manège de traite extérieur.
